# EUROPÄISCHE PATENTSCHRIFT

(11) **EP 3 871 804 B1**
(45) Veröffentlichungstag und Bekanntmachung des Hinweises auf die Patenterteilung: **06.11.2024**
(21) Anmeldenummer: 20159308.4
(22) Anmeldetag: 25.02.2020
(51) Int. Cl.: B22D 17/32, B22D 17/00, B22D 17/04, B22D 25/06, B22D 27/04, B22D 27/20, C22C 1/11

(54) **VERFAHREN ZUM ANPASSEN EINER BAUTEILBESCHREIBUNG EINES ZU FERTIGENDEN WERKSTÜCKS MIT AMORPHEN EIGENSCHAFTEN**
METHOD FOR ADAPTING A COMPONENT DESCRIPTION OF A WORKPIECE TO BE MANUFACTURED WITH AMORPHOUS PROPERTIES
PROCÉDÉ D'AJUSTEMENT D'UNE DESCRIPTION DE COMPOSANT D'UNE PIÈCE À FABRIQUER AVEC PROPRIÉTÉS AMORPHES

(43) Veröffentlichungstag der Anmeldung: 01.09.2021
(73) Patentinhaber: Heraeus Amloy Technologies GmbH, 63450 Hanau (DE)
(72) Erfinder: WACHTER, Hans-Jürgen, 64846 Gross-Zimmern (DE); MILKE, Eugen, 61130 Nidderau (DE); HAMED, Shahabi Shakur, 63457 Hanau (DE); THEISEN, Florian, 63477 Maintal (DE); KLOSCH-TRAGESER, Michael, 63579 Freigericht (DE)
(74) Vertreter: Meissner Bolte Partnerschaft mbB

(56) Entgegenhaltungen:
- US-A- 5 797 443
- US-A1- 2014 227 125
- L.H. LIU ET AL: "Determination of forming ability of high pressure die casting for Zr-based metallic glass", JOURNAL OF MATERIALS PROCESSING TECHNOLOGY, vol. 244, 1 June 2017 (2017-06-01), NL, pages 87 - 96, XP055691487, ISSN: 0924-0136, DOI: 10.1016/j.jmatprotec.2017.01.015
- PARTHIBAN RAMASAMY ET AL: "High pressure die casting of Fe-based metallic glass", SCIENTIFIC REPORTS, vol. 6, no. 1, 11 October 2016 (2016-10-11), XP055690900, DOI: 10.1038/srep35258
- RENHONG TANG ET AL: "Numerical Simulation of Zr-based Bulk Metallic Glass During Continuous Casting Solidification Process", MATERIALS RESEARCH, vol. 18, no. suppl 1, 23 October 2015 (2015-10-23), BR, pages 3 - 9, XP055690905, ISSN: 1516-1439, DOI: 10.1590/1516-1439.319814

## Beschreibung

Die Erfindung betrifft ein computerimplementiertes Verfahren zum Anpassen einer Bauteilbeschreibung eines zu fertigenden Werkstücks mit amorphen Eigenschaften, ein Steuerverfahren, ein computerlesbares-Speichermedium, eine Vorrichtung zum Anpassen einer Bauteilbeschreibung und ein System zur Herstellung eines Werkstücks.

Amorphe Metalle sind eine neuartige Werkstoffklasse, die bei anderen Werkstoffen nicht realisierbare physikalische Eigenschaften bzw. Kombinationen von Eigenschaften aufweisen.

Von amorphen Metallen spricht man, wenn Metalllegierungen auf atomarer Ebene keine kristalline, sondern eine amorphe Struktur aufweisen. Die für Metalle ungewöhnliche amorphe Atomanordnung führt zu einzigartigen Kombinationen physikalischer Eigenschaften. Amorphe Metalle sind im Allgemeinen härter, korrosionsbeständiger und fester als gewöhnliche Metalle bei gleichzeitig hoher Elastizität. So entstehen keine verschiedenen Oberflächenpotentiale, sodass keine Korrosion entstehen kann.

Seit ihrer Entdeckung am California Institute of Technology sind metallische Gläser Gegenstand umfangreicher Forschung. Im Laufe der Jahre gelang es, die Prozessierbarkeit und Eigenschaften dieser Materialklasse kontinuierlich zu verbessern. Waren die ersten metallischen Gläser noch einfache, binäre (aus zwei Komponenten aufgebaute) Legierungen, deren Herstellung Abkühlraten im Bereich von 106 Kelvin pro Sekunde (K/s) erforderten, lassen sich neuere, komplexere Legierungen bereits bei deutlich geringeren Abkühlraten im Bereich einiger K/s in den Glaszustand überführen. Dies hat erheblichen Einfluss auf die Prozessführung sowie die realisierbaren Werkstücke. Die Abkühlgeschwindigkeit, ab der eine Kristallisation der Schmelze ausbleibt und die Schmelze im Glaszustand erstarrt, wird als kritische Abkühlrate bezeichnet. Die kritische Abkühlrate ist eine systemspezifische, stark von der Zusammensetzung der Schmelze abhängige Größe, welche zudem die maximal erreichbaren Bauteildicken festlegt. Bedenkt man, dass die in der Schmelze gespeicherte Wärmeenergie ausreichend schnell durch das System abtransportiert werden muss, wird klar, dass sich aus Systemen mit hohen kritischen Abkühlraten lediglich Werkstücke mit geringer Dicke fertigen lassen. Anfänglich wurden metallische Gläser daher meist nach dem Schmelzspinnverfahren (Englisch: "melt spinning") hergestellt. Die Schmelze wird hierbei auf ein rotierendes Kupferrad abgestreift und erstarrt glasartig in Form von dünnen Bändern bzw. Folien mit Dicken im Bereich einiger hundertstel bis zehntel Millimeter. Durch die Entwicklung neuer, komplexer Legierungen mit deutlich geringeren kritischen Abkühlraten, können zunehmend andere Herstellungsverfahren genutzt werden. Heutige Massivglas-bildende metallische Legierungen lassen sich bereits durch Gießen einer Schmelze in gekühlte Kupferkokillen in den Glaszustand überführen. Die realisierbaren Bauteildicken liegen dabei legierungsspezifisch im Bereich einiger Millimeter bis Zentimeter. Derartige Legierungen werden als metallische Massivgläser (Englisch: "bulk metallic glasses", BMG) bezeichnet. Heutzutage ist eine Vielzahl solcher Legierungssysteme bekannt.

Die Unterteilung metallischer Massivgläser erfolgt gewöhnlich anhand der Zusammensetzung, wobei man das Legierungselement mit dem höchsten Gewichtsanteil als Basiselement bezeichnet. Die bestehenden Systeme umfassen beispielsweise Edelmetall-basierte Legierungen wie Gold-, Platin, und Palladiumbasierte metallische Massivgläser, frühe Übergangsmetall basierte Legierungen wie z.B. Titan- oder Zirkonium-basierte metallische Massivgläser, späte Übergangsmetall-basierte Systeme auf Basis von Kupfer-, Nickel- oder Eisen, aber auch Systeme auf Basis von seltenen Erden, z.B. Neodym oder Terbium.

Metallische Massivgläser weisen im Vergleich zu klassischen kristallinen Metallen typischer Weise folgende Eigenschaften auf:
- eine höhere spezifische Festigkeit, was zum Beispiel dünnere Wandstärken ermöglicht,
- eine höhere Härte, wodurch die Oberflächen besonders kratzfest sein können,
- eine viel höhere elastische Dehnbarkeiten und Resilienzen,
- eine thermoplastische Formbarkeit und
- eine höhere Korrosionsbeständigkeit.

Aufgrund ihrer vorteilhaften Eigenschaften wie z.B. einer hohen Festigkeit und dem Ausbleiben einer Erstarrungsschwindung sind metallische Gläser, insbesondere metallische Massivgläser, sehr interessante Konstruktionswerkstoffe, die sich prinzipiell für die Herstellung von Bauteilen in Serienfertigungsverfahren wie dem Spritzguss eignen, ohne dass weitere Bearbeitungsschritte nach erfolgter Formgebung zwingend erforderlich wären. Um beim Abkühlen aus der Schmelze eine Kristallisation der Legierung zu verhindern, muss eine kritische Abkühlgeschwindigkeit überschritten werden. Je größer jedoch das Volumen der Schmelze ist, desto langsamer (bei ansonsten unveränderten Bedingungen) kühlt die Schmelze ab. Wird eine bestimmte Probendicke überschritten, kommt es zu einer Kristallisation, bevor die Legierung amorph erstarren kann.

Neben den hervorragenden mechanischen Eigenschaften metallischer Gläser ergeben sich aus dem Glaszustand auch einzigartige Prozessierungsmöglichkeiten. So lassen sich metallische Gläser nicht nur durch schmelzmetallurgische Verfahren formen, sondern auch über ein thermoplastisches Formen bei vergleichsweise niedrigen Temperaturen analog zu thermoplastischen Kunststoffen oder Silikatgläsern formgebend verarbeiten. Hierzu wird das metallische Glas zunächst über den Glasübergangspunkt erwärmt und verhält sich dann wie eine hochviskose Flüssigkeit, die bei relativ niedrigen Kräften umgeformt werden kann. Im Anschluss an die Verformung wird das Material wieder unter die Glasübergangtemperatur abgekühlt.

Bei der Verarbeitung von amorphen Metallen wird die natürliche Kristallisation durch rasches Abkühlen (Einfrieren im schmelzflüssigen Zustand) der Schmelze unterbunden, so dass den Atomen die Beweglichkeit genommen wird, bevor sie eine Kristallanordnung einnehmen können. Viele Eigenschaften kristalliner Materialen werden durch Störungen im atomaren Aufbau, sogenannte Gitterdefekte (Leerstellen, Versetzungen, Korngrenzen, Phasengrenzen, etc.) beeinflusst bzw. bestimmt.

Durch das schnelle Abkühlen wird der Schrumpf des Materials reduziert, sodass bei amorphen Metallen genauere Bauteilgeometrien erreicht werden können. Plastische Verformung erfolgt erst bei Dehnungen über 2 %. Im Vergleich dazu verformen sich kristalline, metallische Werkstoffe in der Regel bereits bei deutlichen geringeren Dehnungen (<0.5 %) irreversibel. Die Kombination aus hoher Streckgrenze bei hoher elastischer Dehnung resultiert zudem in einem hohen Speichervermögen an elastischer Energie.

Die Wärmeleitfähigkeit des verwendeten Materials setzt der Abkühlgeschwindigkeit jedoch eine physikalische Grenze, da die im Bauteil enthaltene Wärme über die Oberfläche an die Umgebung abgegeben werden muss. Dies führt zu Einschränkungen in der Herstellbarkeit von Bauteilen und in der Anwendbarkeit von Herstellungsverfahren.

Es sind unterschiedliche Verfahren zur Herstellung von Werkstücken aus amorphen Metallen bekannt. So ist es möglich, Werkstücke unter Verwendung von additiven Fertigungsverfahren, wie dem 3D-Druck herzustellen. Dabei können die amorphen Eigenschaften des Werkstücks durch das Einstellen der Prozessparameter, wie der Scan-Geschwindigkeit, der Energie des Laserstrahls oder des abzufahrenden Musters, sichergestellt werden.

Ein Vorteil der additiven Fertigungstechnik ist, dass prinzipiell jede erdenkliche Geometrie realisiert werden kann. Ferner kann es von Vorteil sein, dass bei additiven Fertigungsverfahren kein gesonderter Kühlprozess notwendig ist, da durch das schichtweise Herstellen des Werkstücks und einer Einstellung der Größe des Schmelzpools über Laserenergie und Verfahrweg des Lasers eine gute Auskühlung gewährleistet sein kann.

Nachteilig bei additiven Fertigungsverfahren sind die zum Zeitpunkt der Anmeldung geringe Aufbauraten gerade bei großdimensionierten Werkstücken. Ferner muss hochreines Pulvermaterial als Ausgangsmaterial für den additiven Fertigungsprozess verwendet werden. Sind Verunreinigungen in dem Material vorhanden, so kann es an den Stellen der Verunreinigung zu Kristallisation kommen, d.h. zu nicht amorphen Metall, welches zu einer Verschlechterung der mechanischen und chemischen Eigenschaften führen kann. Oberflächennah kann es wegen der Verunreinigung notwendig sein, das Werkstück nachzubearbeiten, was aufwendig ist. Darüber hinaus kommt es bei der additiven Fertigung immer zu einer gewissen Rauigkeit an der Oberfläche des Werkstücks, sodass dies in den meisten Fällen durch Schleifen oder Fräsen nachbearbeitet werden muss.

Eine weitere Fertigungsmöglichkeit bietet das Spritzgießen. Dabei können zum Zeitpunkt der Anmeldung Gewichte von Werkstücken im Bereich von 80-100g realisiert werden. Üblicherweise wird das zu verwendende Material mittels induktivem Aufheizen innerhalb von ca. 20 Sekunden auf ca. 1050°C erhitzt und homogenisiert.

Nach dem Aufheizen wird das schmelzflüssige Material mittels eines Stempels in eine Form gedrückt. Dabei ist es für die Materialeigenschaften wichtig, dass wenn die Form vollständig mit Material gefüllt ist, das Material innerhalb der Form überall eine Temperatur oberhalb des Materialschmelzpunktes aufweisen sollte. Um amorphe Materialeigenschaften zu erzielen muss das flüssige Material innerhalb der Form anschließend schnell auf unterhalb der Glasumwandlungstemperatur abgekühlt werden.

Die möglichen Geometrien beim Spritzgießen sind aufgrund der Abkühlgeschwindigkeit des Materials auf Wandstärken von 0,3 -7,0 mm begrenzt. Bei größeren Wandstärken ist die Abkühlgeschwindigkeit zu gering, sodass sich kristalline Strukturen ausbilden bevor das Material auf unterhalb der Glasumwandlungstemperatur abgekühlt ist. Bei kleineren Wandstärken kühlt das Material abhängig von der zu füllenden Länge zu schnell ab und erstarrt bevor die Form vollständig gefüllt ist.

Um schon im Vorfeld bei der Konstruktion, der Dimensionierung, der Auswahl des Legierungswerkstoffes, der Auswahl des Herstellungsverfahrens oder Ähnlichem sicherzugehen, dass die dem Werkstoff zugeführte Wärmemenge an die Umgebung hinreichend schnell abgegeben werden kann, kann das Abkühlverhalten simuliert und analysiert werden.

Die EP3246831 beschreibt z.B. eine Methode und ein System zur Bereitstellung genauer, skalierbarer und vorhersagender 3D-Drucksimulationen auf numerischer Basis. Dabei können komplexe Teile durch unabhängige und beliebige Vernetzung in finite Elemente diskretisiert werden. Anschließend kann der Druckverlauf und die Druckzeit simuliert werden. Das finite Elemente Modell kombiniert die Bauteilstruktur mittels eines Kreuzungsmoduls mit Werkzeugweginformationen. Dies ermöglicht eine Simulation von lokalisierten Erwärmungseffekten und die Kühlleistung für jedes finite Element zu einem beliebigen Zeitpunkt.

Die EP3246831 beschreibt, basierend auf numerischen Methoden, eine skalierbare und vorhersagende 3D-Drucksimulation für die Produktion von komplexen Bauteilen, wobei primär der Druckverlauf, die Druckzeit und die Kühlleistung auf Basis von lokalisierten Erwärmungseffekten simuliert werden. Eine Herstellbarkeitsanalyse des Bauteils, insbesondere in Bezug auf seinen schmelzflüssigen Zustand und das darauffolgende Abkühlen, wird nicht durchgeführt.

Es ist ferner aus der DE102006047806 bekannt, eine Abbildung einer Warmumformung einer Metallplatine aus einem umwandelbaren Stahlwerkstoff mit Hilfe der Finite-Elemente-Methode zu simulieren. Bei der Warmumformungssimulation werden nicht nur die mechanischen und physikalischen Eigenschaften des umzuformenden Stahlwerkstoffs berücksichtigt, sondern es werden im Rahmen einer komplexen thermisch- mechanisch gekoppelten Simulation Werkstoffdaten berücksichtigt, die in Form eines Zeit-Temperatur-Umwandlungs-Datensatzes des spezifischen Stahlwerkstoffs in das Verfahren einfließen. Auf diese Weise können die ermittelten temporären lokalen mechanischen Eigenschaftswerte auf Basis der jeweiligen Phasenzusammensetzung an ein Versagensmodell zur Verbesserung der Bauteilprognose und zur Prozessoptimierung übergeben werden.

Die DE102006047806 beschreibt somit ein Simulationsverfahren zur Abbildung einer Warmumformung einer Metallplatine aus einem umwandelbaren Stahlwerkstoff mit Hilfe der Finite-Elemente-Methode. Dabei stehen temporäre lokale mechanische Eigenschaften, z.B. die Härte und die physikalischen Eigenschaften der Metallplatte während und nach dem Ende der Warmformungssimulation auf der Grundlage der lokalen und temporären Phasenzusammensetzung des Stahlmaterials im Vordergrund.

Darüber hinaus ist aus der EP0864991 ein Verfahren zum Einrichten eines amorphen Bereichs mittels einer Computersimulation eines Halbleitervorrichtungs-Herstellungsprozesses bekannt, indem der amorphe Bereich über eine Beziehung von der Störstellenkonzentration an der Grenzfläche zwischen einem Kristall und dem amorphen Bereich bestimmt wird.

Die EP0864991 beschreibt eine Computersimulation zum Einrichten amorpher Stellen, die jedoch auf Basis einer Strukturanalyse durchgeführt wird. Eine thermische Betrachtung für das gesamte Bauteil ist nicht vorgesehen.

Zusätzlich ist aus der WO2015097273 ein Verfahren zum Herstellen eines Bauteils bekannt, das durch Schmelzen und Verfestigen eines teilkristallinen thermoplastischen Polymers hergestellt wird, wobei die Verwendung des Bauteiles den Kristallinitätsgrad bestimmt. Das vorgeschlagene Verfahren umfasst folgende Schritte:
i. Bestimmen der isothermen Kristallisationskinetik des Polymers in Form einer mathematischen Formel;
ii. Verwenden der in Schritt i) erhaltenen Gleichung, um das Verhalten des Polymers während der Durchführung des Herstellungsverfahrens zu simulieren;
iii. Bestimmen der Bedingungen zum Implementieren des Herstellungsverfahrens durch die Simulation von Schritt ii), um den beabsichtigten Kristallinitätsgrad zu erhalten; und
iv. Herstellen des Teils durch Implementieren des Herstellungsverfahrens mit den in Schritt iii) bestimmten Bedingungen.

Die WO2015097273 beschreibt somit ein Herstellungsverfahren zum Herstellen eines Bauteiles mit einem definierten Kristallinitätsgrad. Hierfür werden ausgehend von den Herstellungsparametern eines die notwendigen Eigenschaften erfüllenden realen Probekörpers, mittels Simulation die Herstellungsparameter des zu fertigenden Bauteils ermittelt. Dabei werden der Fluss und die Verfestigung simuliert.

Ein weiteres Beispiel ist aus der WO2018182513 bekannt, die ein computerimplementiertes Verfahren zur Beurteilung geometrischer Änderungen eines durch einen additiven Fertigungsprozess zu erstellenden Objekts beschreibt, wobei während dieses additiven Herstellungsprozesses ein kristallisierbares Material aus einem Pulver in eine Massenform umgewandelt wird und währenddessen der Gegenstand aus der Massenform gebildet wird.

Das Verfahren der WO2018182513 umfasst:
i. Bereitstellen einer Simulationsdomäne, die ein Finite-Elemente-Modell des Objekts umfasst, das in einen simulierten Kuchen des Pulvers eingebettet ist; wobei das Finite-Elemente-Modell finite Elemente des Objekts und finite Elemente des simulierten Kuchens des Pulvers umfasst;
ii. Zuordnen von thermischen Eigenschaften des volumenkristallharzierbaren Materials zu jedem finiten Element des Objekts;
iii. Zuordnen der thermischen Eigenschaften des pulverkristallisierbaren Materials zu jedem finiten Element des simulierten Kuchens des Pulvers;
iv. Zuordnen einer simulierten ersten Temperatur zu jedem finiten Element;
v. Durchführen einer Finite-Elemente-Analyse des Finite-Elemente-Modells unter einer simulierten Abkühlungsbedingung, wobei die simulierte Abkühlungsbedingung das Anlegen einer simulierten zweiten Temperatur an mindestens eine Grenze des Simulationsbereichs umfasst, wobei die simulierte zweite Temperatur niedriger als die simulierte erste Temperatur ist;

Dabei umfasst die Finite-Elemente-Analyse der WO2018182513 Folgendes:
i. Bestimmen eines simulierten kristallinen Volumenanteils des simulierten kristallisierbaren Volumenmaterials für jedes finite Element des Objekts;
ii. Bestimmen eines simulierten Wärmeausdehnungskoeffizienten für jedes finite Element des Objekts als Funktion des simulierten kristallinen Volumenanteils, des Wärmeausdehnungskoeffizienten (<3 ~ 4) einer kristallinen Phase des kristallisierbaren Materials und des Wärmeausdehnungskoeffizienten (c & ) einer amorphen Phase des kristallisierbaren Materials;
iii. Durchführen der Finite-Elemente-Analyse, bis ein Gleichgewichtszustand erreicht ist.

Die WO2018182513 beschreibt ein computerimplementiertes Verfahren zur Beurteilung geometrischer Änderungen eines durch einen additiven Fertigungsprozess herzustellenden Bauteils. Hierbei steht eine kristallisationsbedingte Volumenänderung im Vordergrund

Aus der Veröffentlichung L.H. LIU ET AL: "Determination of forming ability of high pressure die casting for Zr-based metallic glass", JOURNAL OF MATERIALS PROCESSING TECHNOLOGY, Bd. 244, 1. Juni 2017 (2017-06-01), Seiten 87-96, ISSN: 0924-0136 ist ein Modell zur Berechnung einer kritischen Abkühlrate bekannt, um ein amorphes Werkstück herzustellen. Die Veröffentlichung beschreibt, dass zum Feststellen, ob amorphe Eigenschaften erreicht werden, die tatsächliche Abkühlrate mit einer kritischen Abkühlrate verglichen werden muss. Darüber hinaus beschreibt die Veröffentlichung, dass der Abkühlprozess eines Werkstücks durch Simulation bestimmt werden kann. Die Veröffentlichung behandelt im Kern das Berechnen der kritischen Abkühlrate bei unterschiedlichen Drücken und Werkstückgrößen.

Die US 2014/227125 beschreibt ein Verfahren, um Werkstücke mit kristallin und nicht kristallinen Strukturen herzustellen. Die US 2014/227125 geht von der Beobachtung aus, dass amorphe Metalle in einigen Aspekten negative Eigenschaften aufweisen. Zum Beispiel kann das Material spröde und nur schlecht dehnbar ausgebildet sein. Aus diesem Grund schlägt die US 2014/227125 vor, das bearbeitete Werkstück lokal zu erhitzen, um lokale kristalline Strukturen herzustellen.

Die US 5 797 443 A lehrt ein Verfahren, um amorphe Werkstücke mit möglichst geringen Kosten herzustellen. Den Überlegungen der US 5 797 443 A liegt zugrunde, dass Materialien mit unterschiedlichen Sauerstoffkonzentrationen unterschiedlich teuer sind. Es soll daher das Material mit einer Sauerstoffkonzentration ausgewählt werden, welches noch zu amorphen Eigenschaften beim gefertigten Werkstück führt. Die zu verwendende Sauerstoffkonzentration wird durch die Ermittlung des zeitlichen Abkühlverhaltens des Werkstücks ermittelt, wobei das ermittelte Abkühlverhalten mit einer kritischen Abkühlraten-Kurve verglichen wird. Letztendlich findet also eine Materialauswahl unter Berücksichtigung des Temperaturverhaltens statt, sodass amorphe Materialeigenschaften bei einem gefertigten Werkstück erreicht werden.

Die Veröffentlichung PARTHIBAN RAMASAMY ET AL: "High pressure die casting of Fe-based metallic glass", SCIENTIFIC REPORTS, Bd. 6, Nr. 1, 11. Oktober 2017 (2016-10-11), DOI: 10.1038/srep35258 beschreibt Experimente, mit denen die Parameter für bestimmte Materialien bei der Herstellung eines BMG optimiert werden. Dabei wurde insbesondere der "High Pressure Die Casting" (HPDC) Prozess untersucht. Durch die Experimente wurde insbesondere die Einfüllzeit und die Aushärtezeit bestimmt.

Die Veröffentlichung RENHONG TANG ET AL: "Numerical Simulation of Zr-based Bulk Metallic Glass During Continuous Casting Solidifcation Process", METERIALS RESEARCH, Bd. 18, nr. Suppl 1, 23. Oktober 2015 (2015-10-23), Seiten 3-9, ISSN: 1516-1439, DOI: 10.1590/1516-1439.319814 beschreibt ein Verfahren zur Simulation des Abkühlverhaltens eines Werkstücks während der Produktion mittels eines horizontalen Stranggießens (HCC). Dabei lehrt die Veröffentlichung, dass das Abkühlverhalten stark mit der Ziehgeschwindigkeit korreliert.

Aus den beschriebenen Nachteilen des Stands der Technik ergibt sich die Aufgabe, amorphe Eigenschaften bei Werkstücken sicherzustellen.

Die Aufgabe wird gelöst durch die Gegenstände der Ansprüche 1, 9, 10, 11 und 14.

Die Aufgabe wird insbesondere gelöst durch ein computerimplementiertes Verfahren zum Anpassen einer Bauteilbeschreibung eines zu fertigenden metallischen Werkstücks mit amorphen Eigenschaften, welches für die Steuerung einer Spritzgussvorrichtung vorgesehen ist, umfassend:
- Bestimmen eines Abkühlverhaltens zumindest eines Teils eines zu fertigenden metallischen Werkstücks unter Berücksichtigung einer Bauteilbeschreibung des Werkstücks, wobei das Abkühlverhalten eine Abkühlgeschwindigkeit angibt und die Bauteilbeschreibung als ein CAD-Modell ausgebildet ist und die Bauteilbeschreibung die Geometrie des zu fertigenden Werkstücks angibt;
- Anpassen der Geometrie des zu fertigenden Werkstücks, die durch zumindest eines Teils der Bauteilbeschreibung angegeben wird unter Berücksichtigung des bestimmten Abkühlverhaltens des Werkstücks und unter Berücksichtigung des Vergleichs, wobei das Anpassen ein Bestimmen eines zu verwendenden Materials umfasst, wobei die kritische Abkühlgeschwindigkeit unter Berücksichtigung des zu verwendenden Materials bestimmt wird.

Der Erfindung liegt die Überlegung zu Grunde, dass die amorphen Eigenschaften amorpher Metalle wesentlich durch das Abkühlen des flüssigen Ausgangsmaterials bestimmt werden. Es ist daher vorteilhaft, wenn das Abkühlverhalten des Ausgangsmaterials bestimmt wird und unter Berücksichtigung des Abkühlverhaltens eine Bauteilbeschreibung angepasst wird. Die Bauteilbeschreibung kann derart angepasst werden, dass amorphe Eigenschaften erreicht werden.

Das Abkühlverhalten hängt wie aufgezeigt von der Geometrie des zu fertigenden Werkstücks ab. So kann die Bauteilbeschreibung die Geometrie des zu fertigenden Werkstücks angeben, z.B. durch ein CAD-Modell. Insgesamt kann so sichergestellt werden, dass amorphe Eigenschaften bei einem mit der Bauteilbeschreibung gefertigtem Werkstück erzielt werden.

In einer Ausführungsform kann das Anpassen ein Einfügen von mindestens einer Kühlmittelbeschreibung in die Bauteilbeschreibung umfassen, wobei die Kühlmittelbeschreibung ein Kühlmittel angeben kann, das zu einer erhöhten Energieabfuhr aus dem zu fertigenden Werkstück führt.

Die Anpassung kann derart ausgeführt werden, dass Kühlmittel vorgesehen werden. Kühlmittel können zu einer erhöhten Energieabfuhr aus dem zu fertigenden Werkstück führen. Somit kann das Abkühlen des flüssigen Ausgangsmaterials beschleunigt werden, sodass amorphe Eigenschaften in dem zu fertigenden Werkstück erreicht werden. Es ist zum Beispiel angedacht, dass Kühlmittel innerhalb der Bauteilgeometrie angeordnet werden können. So können Kühlmittel entweder in Regionen angeordnet werden, an denen kein Material vorgesehen ist, oder Material kann durch Kühlmittel ersetzt werden. Insgesamt wird somit eine besonders effiziente Kühlung beim Fertigen des Werkstücks gewährleistet, sodass amorphe Eigenschaften erreicht werden können. Das Kühlmittel kann durch die Kühlmittelbeschreibung angegeben sein. Eine Kühlmittelbeschreibung kann beispielsweise als CAD-Datei ausgebildet sein.

In einer Ausführungsform kann ein/das mindestens eine Kühlmittel als ein Formkörper, insbesondere als ein Metallstab, bevorzugt als ein Kupferstab, und/oder als eine Ummantelung eines/des Werkstücks ausgebildet sein.

Es sind also unterschiedliche Ausführungen für Kühlmittel denkbar. Formkörper oder ein oder mehrere Metallstäbe können insbesondere derart im Werkstück angeordnet werden, sodass zumindest ein Teil des Kühlmittels mit der Umgebung des Werkstücks kontaktiert. Somit kann die Wärme aus dem Inneren des Werkstücks effizient nach Außen transportiert werden. Eine Ummantelung hat den Vorteil, dass einerseits Wärme über eine größere Oberfläche an die Umgebung abgegeben werden kann und andererseits, dass die Wärmeübertragung von dem Werkstück auf die Ummantelung schneller bzw. effizienter erfolgen kann verglichen mit einer Wärmeübertragung von dem Werkstück an die Umgebungsluft.

Erfindungsgemäß umfasst das Anpassen auch ein Bestimmen eines zu verwendenden Materials.

Es ist ebenso denkbar, dass durch das Anpassen ein zu verwendendes Material bestimmt wird. Das Material kann z.B. einen Reinheitsgrad angeben. Darüber hinaus kann das zu verwendende Material durch die Bauteilbeschreibung angegeben sein. Das Anpassen kann in einer Ausführungsform unter Berücksichtigung des Materials ausgeführt werden.

In einer Ausführungsform kann das Verfahren ein Optimieren der Bauteilbeschreibung unter Verwendung einer Finiten-Elemente-Simulation und/oder Finite-Volumen-Simulation des Werkstücks umfassen, insbesondere unter Verwendung der Bauteilbeschreibung.

Die Bauteilbeschreibung kann optimiert werden. So kann die Bauteilbeschreibung für vordefinierte Lastfälle optimiert werden. Dabei kann z.B. das Gewicht optimiert werden, ohne dass es zu funktionalen Einbußen bezüglich definierter Lastfälle kommt. Beispielhaft kann ermittelt werden, ob bestimmte Bereiche der Bauteilgeometrie des Werkstücks kein oder weniger Material benötigen, um den Lastfällen zu genügen.

Dementsprechend kann das Optimieren der Bauteilbeschreibung in einer Ausführungsform eine Berechnung mindestens eines Lastfalls des Werkstücks umfassen.

In einer Ausführungsform kann das Optimieren der Bauteilbeschreibung ein Identifizieren zumindest einer Lokalgeometrie des Werkstücks in der Bauteilbeschreibung umfassen, wobei die Lokalgeometrie einen Bereich der Bauteilbeschreibung angeben kann, in dem Material eingespart werden kann.

Es ist also ebenfalls vorgesehen, dass beim Optimieren eine Lokalgeometrie identifiziert werden kann, wobei im Bereich der Lokalgeometrie Material eingespart werden kann. Somit sind leichtere und dennoch stabile Werkstücke zu fertigen.

Eine/die Lokalgeometrie kann dabei mindestens ein Volumenelement angeben. Ein Volumenelement kann definiert sein als ein Quader oder Tetraeder. Beispielsweise kann es sich bei dem mindestens einen Volumenelement um ein Element handeln, welches im Rahmen einer Finite-Elemente-Simulation, Finite-Volumen-Simulation und/oder Optimierung verwendet wird.

In einer Ausführungsform kann das/ein Einfügen mindestens eines Kühlmittels zumindest im Bereich einer/der identifizierten Lokalgeometrie ausgeführt werden.

Es ist nunmehr möglich, dass in einem Bereich, in dem für definierte Lastfälle kein Material notwendig ist, Kühlmittel angeordnet werden. Somit kann auf effiziente Art und Weise das Werkstück einerseits hinreichend stabil ausgebildet werden und andererseits ist es möglich, die gewünschten amorphen Eigenschaften zu erzielen.

Das Abkühlverhalten kann in einer Ausführungsform eine Abkühlgeschwindigkeit angeben. Aus der Abkühlgeschwindigkeit kann in einer Ausführungsform weiter ein Amorphizitätswert berechnet werden. In einer Ausführungsform kann aus einem berechneten Amorphizitätswert mindestens eine Materialeigenschaft des Werkstücks bestimmt werden. Das Abkühlverhalten kann weiter eine Angabe umfassen, dass eine Abkühlgeschwindigkeit unterhalb einer kritischen Abkühlgeschwindigkeit liegt und/oder eine Angabe umfassen, dass vordefinierte Materialeigenschaften beim Werkstück erreicht werden. Das Abkühlverhalten kann in einer Ausführungsform durch eine Datenstruktur, z.B. als Array, Vektor und/oder Objekt einer objektorienteierten Programmiersprache, gespeichert sein, welche beim Anpassen verwendet wird.

Es ist besonders vorteilhaft, wenn ein Abkühlverhalten für die Bauteilbeschreibung bestimmt wird. Somit ist es möglich, vor dem eigentlichen Anfertigen des Werkstücks, das Temperaturverhalten während des Herstellungsvorgangs zu berücksichtigen. Das Abkühlverhalten kann z.B. eine Abkühlgeschwindigkeit angeben. Die Abkühlgeschwindigkeit kann einen Temperaturverlauf angeben. So ist es möglich festzustellen, wie lange das Abkühlen des zu fertigenden Werkstücks auf eine Zieltemperatur dauert.

Das Verfahren kann ein Simulieren eines/des Abkühlverhaltens für das Werkstück umfassen, wobei das Abkühlverhalten eine Abkühlgeschwindigkeit angeben kann. Durch das Simulieren können Temperaturverläufe und/oder zeitabhängige Temperaturfelder bestimmt werden. Auch das Abkühlverhalten kann mit einer Finite Elemente-Simulation und/oder Finite-Volumen-Simulation bestimmt werden. Insgesamt wird eine genaue Temperaturbestimmung möglich, sodass genauere Ergebnisse beim Anpassen der Bauteilbeschreibung erreicht werden können.

In einer Ausführungsform kann das Simulieren ein Simulieren der Abkühlgeschwindigkeit von einer Ausgangstemperatur im Bereich von bis zu 150°C unter einem Materialschmelzpunkt des verwendeten Materials, insbesondere 750°C bis 1200° C für eine beispielhafte verwendete Legierung, z.B. für eine Zr-basierte Legierung, auf eine Zieltemperatur im Bereich von -50°C der materialabhängigen Glasübergangstemperatur bis zu der materialabhängigen Glasübergangstemperatur umfassen, insbesondere im Bereich 350°C bis 450°C, z.B. 410°C für eine beispielhaft verwendete Zr-basierte Legierung.

Um ein Bilden von kristallinen Strukturen zu verhindern ist es notwendig, das Material schnell unterhalb einer Glasübergangstemperatur abzukühlen, die für eine beispielhaft verwendete Zr-Basis-Legierung bei ca. 410°C liegt. Somit ist es von Vorteil, wenn beim Anpassen der Bauteilbeschreibung berücksichtigt werden kann, wie schnell ein Abkühlen auf eine Temperatur unterhalb der Glasübergangstemperatur erfolgt.

In einer Ausführungsform kann die Bauteilbeschreibung eine Vielzahl von Volumenelementen angeben, wobei das Abkühlverhalten eine Abkühlgeschwindigkeit für mindestens ein Volumenelement als Volumenabkühlgeschwindigkeit angeben kann, insbesondere jeweils für die Vielzahl der Volumenelemente.

Es ist ferner in einer Ausführungsform vorgesehen, dass die Abkühlgeschwindigkeit für jedes Volumenelement individuell angegeben wird. Somit kann die Lokalgeometrie sehr genau bestimmt werden und das Anpassen kann unter Berücksichtigung des Abkühlverhaltens der Vielzahl von Volumenelementen ausgeführt werden. Zusätzlich oder alternativ kann in einer Ausführungsform das Abkühlverhalten für eine Lokalgeometrie angegeben werden. Das Abkühlverhalten der Lokalgeometrie kann dabei durch eine Kombination des Abkühlverhaltens der einzelnen Volumenelemente angeben sein.

Die Größe der Volumenelemente kann ferner die Auflösung der Bestimmung der Lokalgeometrie bestimmen. Die Parameter der Volumenelemente können daher in einer Ausführungsform angepasst werden, um die Genauigkeit, bzw. die Auflösung, der Lokalgeometrie zu optimieren.

Erfindungsgemäß ist ein Vergleichen der Abkühlgeschwindigkeit mit einer kritischen Abkühlgeschwindigkeit vorgesehen, wobei das Anpassen unter Berücksichtigung des Vergleichs ausgeführt werden kann.

In einer Ausführungsform kann das Anpassen nur dann ausgeführt werden, wenn das Vergleichen ergibt, dass die Abkühlgeschwindigkeit z.B. für mindestens ein Volumenelement unterhalb der kritischen Abkühlgeschwindigkeit liegt.

Es ist also denkbar, dass eine Anpassung nur dann ausgeführt wird, wenn ohne eine Anpassung die Abkühlgeschwindigkeit unterhalb der kritischen Abkühlgeschwindigkeit liegt. Die kritische Abkühlgeschwindigkeit kann eine Abkühlgeschwindigkeit angeben, die notwendig ist, um amorphe Eigenschaften zu erreichen. Somit kann sichergestellt werden, dass ein Anpassen nur dann ausgeführt wird, wenn andernfalls keine amorphen Eigenschaften erreicht werden.

In einer Ausführungsform kann das Verfahren ein Klassifizieren umfassen, insbesondere für mindestens ein, vorzugsweise jedes, Volumenelement, einer/der Bauteilbeschreibung, besonders bevorzugt unter Verwendung eines Klassifikators, ob für zumindest einen Teil des Werkstücks die Abkühlgeschwindigkeit unterhalb der kritischen Abkühlgeschwindigkeit liegt. Insbesondere kann in einer Ausführungsform das Klassifizieren für jedes Volumenelement einer Bauteilbeschreibung ausgeführt werden.

Es können somit ebenfalls Methoden des maschinellen Lernens verwendet werden, um festzustellen, ob die Abkühlgeschwindigkeit eines Volumenelements unter oder oberhalb der kritischen Abkühlgeschwindigkeit liegt.

Dabei können Klassifikatoren, wie z.B. Support Vector Machines, künstliche neuronale Netze oder Algorithmen wie Nearest Neighbour Verfahren eingesetzt werden. Es sind dabei Verfahren des bestärkenden Lernens (Englisch: "reinforcement learning"), überwachten Lernens (Englisch: "supervised learning") oder des nicht-überwachten Lernens (Englisch: "unsupervised learning") möglich.

Bei Verfahren des Supervised Learning kann ein Klassifikator zunächst mit Trainingsdaten trainiert werden. Das Verfahren kann in einer Ausführungsform ein Trainieren eines Klassifikators mit Trainingsdaten umfassen, wobei die Trainingsdaten eine Vielzahl von Abkühlverläufen angeben können.

Ein Vorteil beim Einsatz von Klassifikatoren ist, dass die Ausführung deutlich schneller ausgeführt werden kann, als eine Simulation des Abkühlverhaltens. Dadurch wird Prozessorlast eingespart. Dies ermöglicht auch das Ausführen des Verfahrens auf mobilen Endgeräte, wie z.B. Tablets oder Mobiltelefonen.

In einer Ausführungsform kann das Verfahren ein Berechnen einer Wahrscheinlichkeit umfassen, die angeben kann, insbesondere für mindestens ein Volumenelement einer/der Bauteilbeschreibung, vorzugsweise jedes Volumenelements, besonders bevorzugt unter Verwendung eines Regressionssystems bzw. einer Regressionseinheit, ob für zumindest einen Teil des Werkstücks die Abkühlgeschwindigkeit unterhalb der kritischen Abkühlgeschwindigkeit liegt.

Im Folgenden werden die Begriffe Regressionseinheit und Regressionssystem als äquivalent betrachtet.

Es ist ferner möglich, über ein Regressionssystem verschiedene Werte direkt zu berechnen. Auch das Verwenden eines Regressionssystems ist deutlich schneller, als das Simulieren des Abkühlverhaltens. Mit einem Regressionssystem kann auch ein nichtlineares Verhalten, wie es bei einem Abkühlprozess vorkommt, angenähert werden. Insbesondere das Berechnen einer Wahrscheinlichkeit, ob bei einem Volumenelement die Abkühlgeschwindigkeit unterhalb der kritischen Abkühlgeschwindigkeit liegt, ist vorteilhaft.

Es ist in einer Ausführungsform nämlich möglich, dass das Anpassen nur dann ausgeführt wird, wenn für mindestens ein Volumenelement die Wahrscheinlichkeit, ob bei dem mindestens einen Volumenelement die Abkühlgeschwindigkeit unterhalb der kritischen Abkühlgeschwindigkeit liegt, über einem Anpassschwellwert liegt, z.B. größer gleich 50%, größer gleich 60%, größer gleich 70%, größer gleich 80%, größer gleich 90%, größer gleich 95% oder größer gleich 99%.

Das Regressionssystem kann ferner dazu ausgebildet sein, eine Vielzahl von Volumenelementen anzugeben, in denen eine Anpassung ausgeführt werden kann. Dabei kann durch das Regressionssystem eine Vielzahl von Koordinaten ausgeben werden. Eine Koordinate kann dabei einem Volumenelement entsprechen und/oder zugeordnet sein. Somit ist es auf sehr einfache Art und Weise möglich, zu bestimmen, wie die Bauteilbeschreibung angepasst werden muss. Ein Regressionssystem kann z.B. als ein künstliches neuronales Netzwerk ausgebildet sein.

Als Eingabe für das künstliche neuronale Netz des Regressionssystems und/oder des Klassifikators kann ein dreidimensionaler Tensor dienen, der an jeder Koordinate eine Angabe enthält, ob Material an dieser Stelle vorhanden ist oder nicht. Es ist ferner möglich, dass jede Koordinate des Tensors mit einem Tupel assoziiert ist, welches Materialangaben umfassen kann. Materialangaben können umfassen: eine Angabe, ob Material an der Koordinate vorhanden ist, eine Angabe, welche Art von Material vorhanden ist und/oder Materialparameter. Materialparameter können z.B. umfassen: Materialelastizität und/oder Dichte.

Die Ausgabe des künstlichen neuronalen Netzes des Regressionssystems und/oder des Klassifikators kann als Tupel ausgebildet sein.

Die Aufgabe wird ferner insbesondere gelöst durch ein Steuerverfahren, umfassend
- Bereitstellen einer Bauteilbeschreibung, die ein zu fertigendes Werkstück angibt;
- Anpassen der Bauteilbeschreibung nach einem Verfahren wie es vorstehend beschrieben worden ist;
- Steuern einer Spritzgussvorrichtung unter Verwendung der angepassten Bauteilbeschreibung zur Fertigung eines Werkstücks.

Es ist also ferner vorgesehen, dass eine angepasste Bauteilbeschreibung unmittelbar durch eine Fertigungsanlage zum Fertigen eines Werkstücks verwendet wird. Damit kann prozesssicher ein Werkstück gefertigt werden, welches über amorphe Eigenschaften verfügt.

Die Aufgabe wird ferner insbesondere gelöst durch ein computerlesbares-Speichermedium, welches Instruktionen enthält, die mindestens einen Prozessor dazu veranlassen, ein Verfahren wie vorstehend beschrieben, zu implementieren, wenn das Verfahren von dem mindestens einen Prozessor ausgeführt wird.

Die Aufgabe wird ferner insbesondere gelöst durch eine Vorrichtung zum Anpassen einer Bauteilbeschreibung eines zu fertigenden metallischen Werkstücks mit amorphen Eigenschaften, Folgendes aufweisend:
- mindestens eine Speichereinheit zur Speicherung mindestens einer Bauteilbeschreibung, wobei die Bauteilbeschreibung als ein CAD Modell ausgebildet ist;
- mindestens eine Abkühlbestimmungseinheit, die dazu ausgebildet ist, unter Berücksichtigung der mindestens einen Bauteilbeschreibung ein Abkühlverhalten zumindest eines Teils eines zu fertigenden metallischen Werkstücks zu bestimmen, wobei das Abkühlverhalten eine Abkühlgeschwindigkeit angibt;
- eine Vergleichseinheit, die dazu ausgebildet ist, die Abkühlgeschwindigkeit mit einer kritischen Abkühlgeschwindigkeit zu vergleichen;
- eine Anpassungseinheit, die dazu ausgebildet ist, die Geometrie des zu fertigenden Werkstücks anzupassen, die durch zumindest einen Teil der Bauteilbeschreibung unter Berücksichtigung des bestimmten Abkühlverhaltens und unter Berücksichtigung des Vergleichs anzupassen, und wobei die Anpassungseinheit ferner dazu ausgebildet ist, ein zu verwendendes Material zu bestimmen, wobei die kritische Abkühlgeschwindigkeit unter Berücksichtigung des zu verwendenden Materials bestimmt ist.

In einer Ausführungsform kann die Anpassungseinheit dazu ausgebildet sein, mindestens eine Kühlmittelbeschreibung in die Bauteilbeschreibung einzufügen, wobei die Kühlmittelbeschreibung ein Kühlmittel angeben kann.

In einer Ausführungsform kann ein/das mindestens eine Kühlmittel als ein Formkörper, als ein Metallstab, insbesondere als ein Kupferstab und/oder als eine Ummantelung eines/des Werkstücks ausgebildet sein.

In einer Ausführungsform kann die Vorrichtung eine Optimierungseinheit umfassen, die dazu ausgebildet sein kann, die Bauteilbeschreibung, insbesondere unter Verwendung einer Finite-Elemente-Simulation und/oder einer Finite-Volumen-Simulation des Werkstücks, zu optimieren.

In einer Ausführungsform kann die Optimierungseinheit ferner dazu ausgebildet sein, mindestens einen Lastfall des Werkstücks als Teil der Optimierung zu berechnen.

In einer Ausführungsform kann die Optimierungseinheit ferner dazu ausgebildet sein, zumindest eine Lokalgeometrie des Werkstücks in der Bauteilbeschreibung zu identifizieren, wobei die Lokalgeometrie einen Bereich des Werkstücks angeben kann, in dem Material eingespart werden kann.

In einer Ausführungsform kann eine/die Lokalgeometrie mindestens ein Volumenelement angeben.

In einer Ausführungsform kann die Anpassungseinheit dazu ausgebildet sein, ein/das Einfügen mindestens eines Kühlmittels im Bereich einer/der identifizierten Lokalgeometrie auszuführen.

In einer Ausführungsform kann das Abkühlverhalten eine Abkühlgeschwindigkeit angeben. Die Bestimmungseinheit kann in einer Ausführungsform dazu ausgebildet sein, unter Verwendung der Abkühlgeschwindigkeit einen Amorphizitätswert zu berechnen. Ferner kann die Bestimmungseinheit in einer Ausführungsform dazu ausgebildet sein, unter Verwendung des Amorphizitätswertes mindestens eine Materialeigenschaft zu bestimmen. Darüber hinaus kann das Abkühlverhalten eine Angabe umfassen, dass die Abkühlgeschwindigkeit unterhalb einer kritischen Abkühlgeschwindigkeit liegt und/oder eine Angabe, dass vordefinierte Materialeigenschaften erreicht werden.

In einer Ausführungsform kann die Vorrichtung eine Simulationseinheit aufweisen, die dazu ausgebildet sein kann, den Simulationsschritt des vorstehend beschriebenen Verfahrens umzusetzen. Die Simulationseinheit kann demnach dazu ausgebildet sein, ein/das Abkühlverhalten für das Werkstück zu simulieren, wobei das Abkühlverhalten eine Abkühlgeschwindigkeit angeben kann. Ferner kann die Simulationseinheit dazu ausgebildet sein, Temperaturverläufe und/oder zeitabhängige Temperaturfelder zu bestimmen.

In einer Ausführungsform kann die Simulationseinheit dazu ausgebildet sein, die Simulation der Abkühlgeschwindigkeit von einer Ausgangstemperatur im Bereich von bis zu 150°C unter einem Materialschmelzpunkt des verwendeten Materials, insbesondere 750°C bis 1200° C für eine beispielhaft verwendete Legierung, z.B. eine Zr-basierte Legierung, auf eine Zieltemperatur im Bereich von der, insbesondere materialabhängigen, Glasübergangstemperatur - 50°C zu simulieren, insbesondere 410°C für eine beispielhaft verwendete Zr-basierte Legierung.

In einer Ausführungsform kann die Bauteilbeschreibung eine Vielzahl von Volumenelementen angeben, wobei das Abkühlverhalten die Abkühlgeschwindigkeit als eine Volumenabkühlgeschwindigkeit für mindestens ein Volumenelement angeben kann, insbesondere jeweils für die Vielzahl der Volumenelemente.

In einer Ausführungsform kann die Anpassungseinheit dazu ausgebildet sein, das Anpassen nur dann auszuführen, wenn das Vergleichen ergibt, dass die Abkühlgeschwindigkeit für mindestens ein Volumenelement unterhalb der kritischen Abkühlgeschwindigkeit liegt.

In einer Ausführungseinheit kann die Vorrichtung eine Klassifikationseinheit aufweisen, die dazu ausgebildet sein kann, insbesondere für mindestens ein, vorzugsweise für jedes Volumenelement, einer/der Bauteilbeschreibung zu bestimmen, ob für zumindest einen Teil des Werkstücks die Abkühlgeschwindigkeit unterhalb der Grenzabkühlgeschwindigkeit liegt.

In einer Ausführungsform kann die Vorrichtung eine Regressionseinheit aufweisen, die dazu ausgebildet sein kann, eine Wahrscheinlichkeit zu berechnen, die angeben kann, insbesondere für mindestens ein Volumenelement, vorzugsweise jedes Volumenelement, einer/der Bauteilbeschreibung, ob für zumindest einen Teil des Werkstücks die Abkühlgeschwindigkeit unterhalb der Grenzabkühlgeschwindigkeit liegt.

Die Aufgabe wird ferner insbesondere gelöst durch ein System zur Herstellung eines Werkstücks, Folgendes aufweisend:
- Eine Vorrichtung zum Anpassen einer Bauteilbeschreibung, wie sie vorstehend beschrieben wurde;
- Eine Spritzgussvorrichtung, die dazu ausgebildet ist, ein Werkstück unter Verwendung einer Bauteilbeschreibung, insbesondere unter Verwendung einer angepassten Bauteilbeschreibung, herzustellen.

In einer Ausführungsform kann das System umfassen:
- eine Kammer der Spritzgussvorrichtung zur Aufnahme von flüssigem Material;
- einen Stempel, der dazu ausgebildet ist, flüssiges Material in die Kammer mit einer Stempelgeschwindigkeit einzubringen, wobei die Stempelgeschwindigkeit unter Berücksichtigung der Bauteilbeschreibung ausgewählt ist.

Hinsichtlich des computerlesbare-Speichermediums, der Vorrichtung und des Systems ergeben sich ähnliche oder identische Vorteile, wie sie bereits im Zusammenhang mit dem Verfahren und dem Steuerverfahren beschrieben worden sind.

Es ist vorgesehen, dass sämtliche hinsichtlich des Verfahrens beschriebene Aspekte mit der Vorrichtung und/oder dem System kombinierbar sind. Ebenfalls ist vorgesehen, dass die im Zusammenhang mit der Vorrichtung und dem System beschriebenen Handlungen/Verfahrensschritte mit dem beschriebenen Verfahren kombinierbar sind.

Im Folgenden wird die Erfindung anhand von Ausführungsbeispielen näher erläutert. Dabei zeigen:
- Figur 1:: eine schematische Darstellung einer Spritzgussmaschine;
- Figur 2:: eine schematische Darstellung eines Werkzeugs;
- Figur 3:: einen Querschnitt eines Werkstücks mit einem Kühlmittel;
- Figur 4:: einen Temperaturverlauf für ein Werkstück;
- Figur 5:: eine Zuordnung von Temperaturverläufen zu Volumenelementen einer Bauteilbeschreibung;
- Figur 6:: schematisch den Ablauf einer Optimierung und Anpassung einer Bauteilbeschreibung ;
- Figur 7:: die Funktionsweise eines künstlichen neuronalen Netzes;
- Figur 8:: ein erstes Ausführungsbeispiel einer Vorrichtung zum Anpassen einer Bauteilbeschreibung;
- Figur 9:: ein zweites Ausführungsbeispiel einer Vorrichtung zum Anpassen einer Bauteilbeschreibung;
- Figur 10:: ein drittes Ausführungsbeispiel einer Vorrichtung zum Anpassen einer Bauteilbeschreibung;
- Figur 11:: ein viertes Ausführungsbeispiel einer Vorrichtung zum Anpassen einer Bauteilbeschreibung.

Im Folgenden werden für gleiche oder gleichwirkende Teile dieselben Bezugsziffern verwendet.

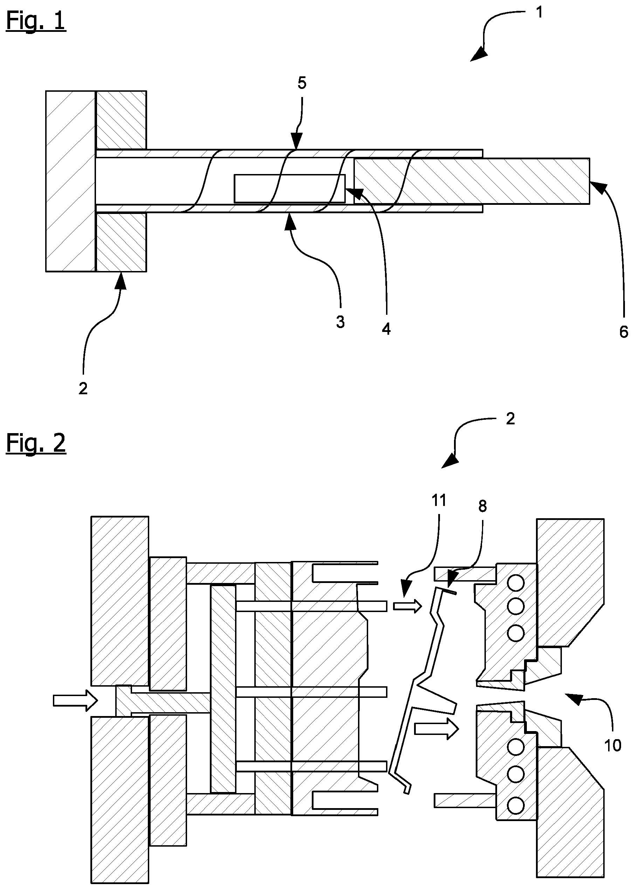

Die Figur 1 zeigt eine schematische Darstellung einer AMM (Amorphous-Metal)-Spritzgussanlage 1. Die Spritzgussanlage 1 umfasst eine Form im Werkzeug 2 und eine Schmelzkammer 3. Der Schmelzkammer 3 wird über einen Roboter ein massives Legierungssegment einer amorph erstarrenden Legierung (Rohling) 4 zugeführt und mittig in einer Induktionsspule 5 platziert. Der Rohling 4 wird innerhalb der Schmelzkammer 3 mittels eines Heizelements insbesondere eines Induktionsfeldes, welches durch die Induktionsspule 5 erzeugt wird, erhitzt. Bei dem Rohling 4 handelt es sich um ein massives Legierungssegment einer amorph erstarrenden Legierung. Das Legierungssegment 4 weist zum Beispiel einen bestimmten Anteil Palladium, Platin, Zirconium, Titan, Kupfer, Aluminium, Magnesium, Niobium, Silizium und/oder Yttrium auf.

Durch das Heizelement bzw. die Induktionsspule 5 wird der Rohling 4 zum Schmelzen gebracht, sodass er in schmelzflüssiger Form vorliegt. Vorzugsweise wird der Rohling 4 auf eine Temperatur von 1050 °C aufgeheizt. Durch einen Kolben 6 wird das schmelzflüssige Material in das Werkzeug 2 eingespritzt.

Figur 2 zeigt den schematischen Aufbau eines Spritzwerkzeuges. Mittels einer oder einer Vielzahl von Öffnungen 10, die in eine Formkammer 11 eines Werkzeuges 2 führen, wird die Formkammer 11 mit einer Schmelze gefüllt. Die Formkammer 11 ist als eine Negativform des herzustellenden Werkstücks 8 ausgelegt. In dem Ausführungsbeispiel der Figur 2 ist vorgesehen, dass eine Öffnung 10 dazu verwendet werden kann, flüssiges Material in die Formkammer 11 zu führen. Es kann vorteilhaft sein, mehrere Angüsse zur Füllung der Formkammer 11 zu nutzen, um eine gleichmäßige Temperaturverteilung zu erzielen als auch, um Verwirbelungen der Schmelze zu verringern. Eine gleichmäßige Temperaturverteilung und eine geringe Anzahl von Verwirbelungen führen zu einem besseren Kühlvorgang, zu einer homogenen Abkühlung und damit zu gleichmäßigen amorphen Materialeigenschaften.

Innerhalb der Formkammer 11 muss das flüssige Material schnell auskühlen, um eine Kristallisation zu verhindern. Das Auskühlen des flüssigen Materials hängt stark von der Geometrie des herzustellenden Bauteils bzw. Werkstücks 8 ab.

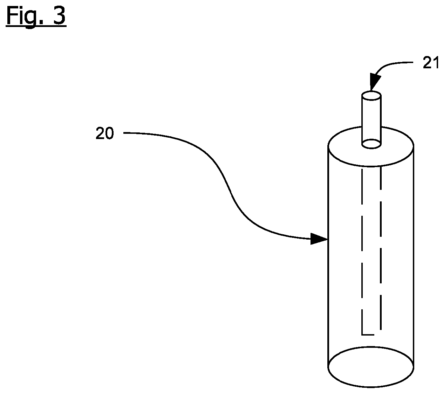

Figur 3 zeigt ein beispielhaftes Bauteil 20, welches ein Zylinder 20 ist. Je nach Größe des Zylinders 20, d.h. seiner Höhe und seines Durchmessers, dauert der Auskühlvorgang innerhalb des Zylinders 20 länger oder kürzer. Bei einer kritischen Größe des Zylinders 20 kann das Auskühlen nicht schnell genug ausgeführt werden, um eine Kristallisation des Materials zu verhindern. Somit kommt es zu kristallinen Strukturen und nicht zu den gewünschten amorphen Strukturen.

Um die gewünschten amorphen Strukturen zu erhalten, d. h. eine Kristallisation zu verhindern, muss die Abkühlgeschwindigkeit im inneren Bereich des Zylinders 20 hoch genug sein. Das bedeutet, dass die Abkühlgeschwindigkeit im Inneren des Zylinders 20 größer als eine kritische Abkühlgeschwindigkeit ist. Um das Abkühlen zu beschleunigen, können innerhalb eines Bauteils 20 bzw. eines Werkstücks 8 Kühlmittel 21 angeordnet werden. Beispielsweise ist es denkbar, dass Formteile 21 in dem zu fertigenden Bauteil 20 angeordnet werden. In dem Beispiel der Figur 3 ist zum Beispiel ein Metallstab 21 innerhalb des Zylinders 20 angeordnet und befestigt. Durch den Metallstab 21 kann nun Schmelzwärme sowohl an den Metallstab 21 als auch in das Werkzeug 2 abgegeben werden und der Metallstab 21 sorgt somit dafür, dass eine höhere Abkühlgeschwindigkeit erzielt werden kann. Durch die Möglichkeit des Umspritzens von Formkörpern 20 mit hoher Wärmeleitung können auch größere amorphe zwei-Komponentenbauteile hergestellt werden. Die amorphen Funktionsflächen sind so aus ausgelegt, dass sie die mechanischen, physikalischen oder chemischen Anforderungen erfüllen. Es ist somit möglich, trotz der Größe des Bauteils 20 eine Kristallisation zu verhindern.

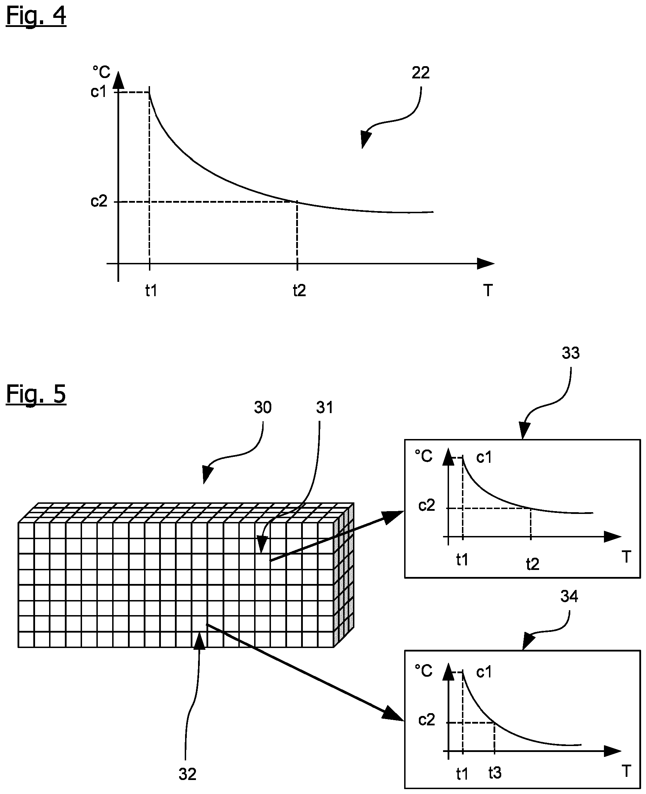

Figur 4 zeigt einen beispielhaften Temperaturverlauf 22. Das Ausführungsbeispiel der Figur 4 bezieht sich auf den inneren Teil des Werkstücks 20 der Figur 3. Wie gezeigt ist, fällt die Temperatur von einer Ausgangstemperatur C1 zu einem Zeitpunkt t1 auf eine Temperatur C2 ab, die zu einem Zeitpunkt t2 erreicht ist.

Es kann daher eine Abkühlgeschwindigkeit ermittelt werden, die den Temperaturabfall, d. h. die Temperaturdifferenz C1 - C2, im Intervall von t1 bis t2 angibt. Darüber hinaus ist es möglich, festzustellen, ob die Abkühlgeschwindigkeit hoch genug ist, um eine Kristallisation zu verhindern. Die Abkühlgeschwindigkeit, mit der eine Kristallisation verhindert wird, kann als kritische Abkühlgeschwindigkeit bezeichnet werden. Um festzustellen, ob ein zu fertigendendes Bauteil bzw. Werkstück über amorphe Eigenschaften verfügen wird, ist es daher möglich, zu ermitteln, ob die Abkühlgeschwindigkeit an jeder Stelle des Werkstücks größer ist als die kritische Abkühlgeschwindigkeit ist.

Werkstücke können durch eine Bauteilbeschreibung digital beschrieben werden, z.B. mit einer CAD-Datei. So zeigt die Figur 5 eine Bauteilbeschreibung 30 eines Quaders, die aus einer Vielzahl von Volumenelementen 31,32 aufgebaut ist. Bei der Bauteilbeschreibung 30 kann es sich also beispielsweise um ein CAD-Modell handeln, welches mittels einer Simulationssoftware in einzelne Volumenelemente 31, 32 unterteilt ist. Für jedes Volumenelement 31, 32 der Bauteilbeschreibung 30 kann nun das Temperaturverhalten simuliert bzw. vorhergesagt werden.

So zeigt die Figur 5, dass einem ersten Volumenelement 31 ein erster Temperaturverlauf 33 zugeordnet ist. Einem zweiten Volumenelement 32 ist ein zweiter Temperaturverlauf 34 zugeordnet. Die Temperaturverläufe 33, 34 zeigen den Temperaturabfall von einer Ausgangstemperatur C1 auf eine Grenztemperatur C2. Bei einem Beispiel einer Zirkoniumbasierten amorph erstarrenden Legierung beträgt die Ausgangstemperatur ca. 850 °C und die Grenztemperatur 410 °C. Das Material 8 des Werkstücks, welches durch die Bauteilbeschreibung 30 angegeben ist, hat ca. eine Temperatur von 850 °C, wenn es in die Form 2 eingespritzt wurde. Die Glasübergangstemperatur bei der gewählten Legierung liegt bei ca. 410 °C. Das bedeutet, dass beim Überschreiten einer kritischen Abkühlrate, d.h. oberhalb der kritischen Abkühlgeschwindigkeit, keine kristalline Struktur mehr eingenommen wird. Wenn also das Material 8 schnell genug auf die kritische Temperatur heruntergekühlt wird, so werden amorphe Strukturen erhalten. Sollte die kritische Abkühlrate bzw. die kritische Abkühlgeschwindigkeit unterschritten werden, erstarrt die Schmelze im kristallinen und nicht im amorphen Zustand.

Wie aus der Figur 5 erkennbar ist, wird bei dem ersten Temperaturverlauf 33 die Grenztemperatur C2 zu einem Zeitpunkt t2 erreicht. Bei dem zweiten Temperaturverlauf 34 wird die Grenztemperatur C2 zu einem Zeitpunkt t3 erreicht. Wir aus dem ersten und dem zweiten Temperaturverlauf 33, 34 erkennbar ist, liegt der Zeitpunkt t3 vor dem Zeitpunkt t2. Das bedeutet, dass die Temperatur im Temperaturverlauf 33, welcher dem ersten Volumenelement 31 zugeordnet ist, langsamer fällt als im zweiten Temperaturverlauf 34, welcher dem zweiten Volumenelement 32 zugeordnet ist. Die Abkühlgeschwindigkeit im zweiten Temperaturverlauf 34 ist daher größer als im ersten Temperaturverlauf 33. Setzt man voraus, dass die Abkühlgeschwindigkeit in dem ersten Temperaturverlauf 33 kleiner als die notwendige kritische Abkühlgeschwindigkeit zum Erhalt von amorphen Strukturen ist, muss die Bauteilbeschreibung 30 angepasst werden, um die Wärme schneller aus dem Werkstück 8 heraus zu befördern, sodass die Abkühlgeschwindigkeit an der Stelle des ersten Volumenelements 31 größer als die kritische Abkühlgeschwindigkeit ist.

Die Temperaturdiagramme 33 und 34 können unter Verwendung einer Simulationseinheit erzeugt werden. Das bedeutet, dass für jedes Volumenelement 31, 32 eine Simulation des Temperaturverhaltens ausgeführt wird. Damit ist es möglich, die Temperaturdiagramme 33 und 34 sehr genau zu bestimmen. Die Ergebnisse der Simulationseinheit können als Abkühlverhalten digital bereitgestellt werden, z.B. als ein Objekt in einer objektorientierten Programmiersprache. Es ist jedoch auch möglich, dass das Abkühlverhalten als Textdatei oder in einem anderen beliebigen Format bereitgestellt wird.

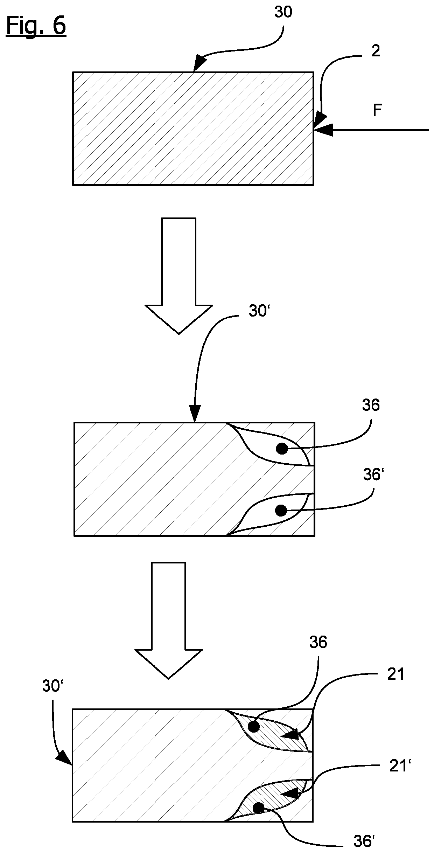

Die Figur 6 zeigt ein Ausführungsbeispiel, in dem eine Bauteilbeschreibung 30 optimiert wird und bei dem in die Bauteilbeschreibung 30 eines Werkstücks Kühlmittel 21, 21' eingebracht werden, sodass die Abkühlgeschwindigkeit vergrößert wird. Das Kühlmittel 21, 21' wird dabei durch eine Kühlmittelbeschreibung angegeben, die eine digitale Repräsentation des Kühlmittels 21, 21' darstellen kann, z.B. eine CAD-Datei.

In dem Ausführungsbeispiel der Figur 6 wird durch die Bauteilbeschreibung 30 ein dreidimensionaler Quader beschrieben, wobei die Figur 6 eine seitliche Schnittansicht darstellt. An der rechten Seite des Werkstücks bzw. der zugehörigen Bauteilbeschreibung 30 ist an einem Kraftangriffspunkt 2 ein Kraftvektor F eingezeichnet. Mithilfe eines Material-Optimierungsverfahrens wird nun ermittelt, an welchen Stellen des Werkstücks, welches durch die Bauteilbeschreibung 30 beschrieben ist, Material eingespart werden kann. Dabei wird die Materialoptimierung unter Berücksichtigung des durch den Kraftvektor F an dem Kraftangriffspunkt 2 definierten Lastfalls ausgeführt.

Wie weiter aus der Figur 6 hervorgeht, ist das Ergebnis der Materialoptimierung eine optimierte Bauteilbeschreibung 30' für ein optimiertes Werkstück, das bzw. die Leerräume 36, 36' aufweist. Leerräume 36, 36' definieren eine Lokalgeometrie, an der kein Material notwendig ist, sodass das mit der Bauteilbeschreibung 30 produzierte optimierte Werkstück dem definierten Lastfall standhält.

Es ist nunmehr vorgesehen, dass in den Leerräumen 36, 36' Kühlmittel 21, 21' angeordnet werden, um den Wärmetransport aus dem Werkstück heraus zu verbessern. Zum Beispiel kann es sich bei den Kühlmitteln 21, 21' um Formteile aus Kupfer handeln, welche eine gute Wärmeleitfähigkeit aufweisen. Es ist jedoch auch möglich, andere Materialien zu verwenden. Bei dem gezeigten Ausführungsbeispiel werden die Leerräume 36, 36' vollständig ausgefüllt. Es ist auch möglich, dass zumindest die Außenkontur der Leerräume 36, 36' mit einem Material ausgefüllt werden, welches über eine ausreichende Wärmeleitfähigkeit verfügt, wie zum Beispiel Kupfer.

Neben einer Simulation für die Bestimmung der Temperaturverläufe eines Werkstücks bzw. der Volumenelemente 31, 32 einer Bauteilbeschreibung 30 ist es auch möglich, eine Klassifikation auszuführen. So ist es möglich, jedes Volumenelement 31,32 dahingehend zu klassifizieren, ob eine dem jeweiligen Volumenelement 31, 32 zugeordnete Abkühlgeschwindigkeit größer als eine kritische Abkühlgeschwindigkeit ist. Damit ist es möglich, auf eine Simulation zu verzichten, sodass eine effizientere Verarbeitung möglich ist. Eine solche Klassifikation kann mit einem Klassifikator bzw. einer Klassifikationseinheit ausgeführt werden. Zum Beispiel können sogenannte nearest neighbour Verfahren, künstliche neuronale Netze oder Stützvektormaschinen (Support Vector Machines) eingesetzt werden. Diese Klassifikatoren werden in einer Trainingsphase mit Trainingsdaten trainiert. Die Trainingsdaten enthalten für eine Vielzahl von Bauteilbeschreibungen und die jeweiligen enthaltenen Volumenelemente weisen Angaben darüber auf, ob die jeweilige Abkühlgeschwindigkeiten der Volumenelemente größer als eine kritische Abkühlgeschwindigkeit sind. Die kritische Abkühlgeschwindigkeit kann unter Berücksichtigung des für das Werkstück vorgesehenen Materials bestimmt werden.

Neben einer Klassifikation ist es ebenfalls möglich mit einem Regressor bzw. einer Regressionseinheit einen Wert der Abkühlgeschwindigkeit zu prognostizieren. So kann ebenfalls auf eine aufwändige Simulation verzichtet werden. Als Regressionseinheiten kommen auch künstliche neuronale Netze in Betracht.

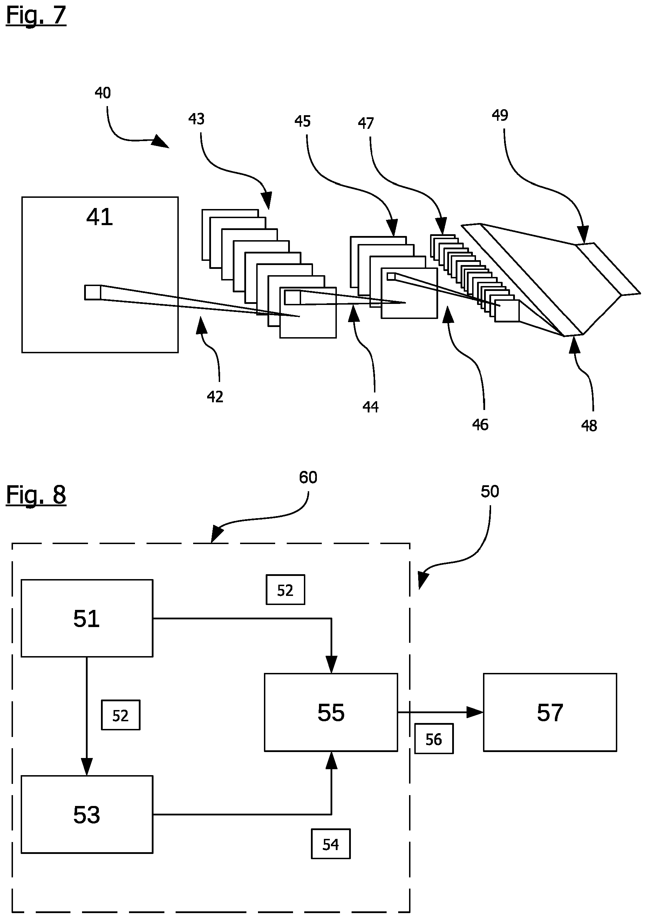

Figur 7 zeigt ein künstliches neuronales Netz, was im Falle der Figur 7 als ein sogenanntes Convolutional Neural Network 40 (CNN 40) ausgebildet ist. Das neuronale Netz 40 der Figur 7 kann als Klassifikator oder auch als Regressor ausgebildet sein.

Eingangsdaten 41 für das neuronale Netz 40 können ein Tensor, d. h. eine dreidimensionale Matrix, sein, die über eine Vielzahl von Datenelementen verfügt. Jedes Datenelement kann zu einem Volumenelement korrespondieren. Jedes Datenelement kann als ein Tupel ausgebildet sein, das angibt, ob an dem Ort des korrespondierenden Volumenelements Material vorhanden ist, welches Material verwendet wird und/oder welche Ausgangstemperatur an dem Ort des korrespondierenden Volumenelements vorherrscht.

Ein CCN ist über eine Vielzahl von Parametern definiert. Ein Kernel scannt sequenziell die Eingangsdaten in einem ersten Schritt. Die Schrittweite des Kernels, der sogenannte stride, gibt an, um wie viele Volumenelemente der Kernel bei jedem Scan verschoben werden muss. Die Größe des Kernels kann ebenfalls festgelegt werden. Damit definieren die Schrittweite und die Größe des Kernels die sogenannten Merkmalsdetektoren 43, die durch eine erste Faltung 42 erzeugt werden. Jeder Merkmalsdetektor 43 detektiert in den Eingangsdaten ein bestimmtes Merkmal. Zum Beispiel kann ein Merkmalsdetektor 43 angeben, ob an einer bestimmten Stelle Material vorhanden ist oder nicht. Insgesamt wird eine Vielzahl von Merkmalsdetektoren 43 erzeugt, die nicht vorher manuell definiert worden sind.

Nach dem gleichen Prinzip wird in einer zweiten Faltung 44 ein neuer Satz von Merkmalsgeneratoren 45 aus den ersten Merkmalsdetektoren 43 erzeugt, wobei bei der zweiten Faltung die Anzahl der Merkmalsgeneratoren gegenüber der ersten Faltung reduziert ist. Ein solcher Schritt wird als pooling oder subsampling bezeichnet.

Bei einer dritten Faltung 46 wird ein dritter Satz von Merkmalsgeneratoren 47 erzeugt. Im letzten Schritt wird mittels einer sogenannten soft-max Schicht jedem Volumenelement eine Klasse zugeordnet. Das bedeutet, dass aus der Ausgabe erkennbar ist, ob die abgekühlte Geschwindigkeit für ein Volumenelement größer oder kleiner als die kritische Abkühlgeschwindigkeit ist.

Jede Schicht des CCN 40 besteht aus einer großen Anzahl von Neuronen, d. h. von Aktivierungsfunktionen, denen Gewichte zugeordnet sind. Abhängig von dem Gewicht und einem Eingabewert wird die Ausgabe des Neurons aktiviert oder nicht aktiviert. Mögliche Aktivierungsfunktionen umfassen zum Beispiel logit, arc tan, Gausssche Funktionen. Das Training des CCN 40 wird unter Verwendung des Backpropagation Algorithmus ausgeführt, wobei die Werte der Gewichte bestimmt werden.

Für CNN gibt es eine Reihe unterschiedlicher Modelle, wie zum Beispiel VGG-net, RES-net, general adversiral networks oder google LeNet. Eine jeder dieser Implementierungen kann verwendet werden oder es ist eine andere Implementierung möglich. Das Training der neuronalen Netze kann effizient ausgeführt werden, da eine Vielzahl der Operation parallelisiert ausgeführt werden kann. Die Inferenz, d. h. das Abfragen von Werten für bestimmte Bauteilbeschreibung, ist sehr effizient ausführbar.

Die Figuren 8-11 zeigen unterschiedliche Ausführungsbeispiele für Vorrichtungen, die die vorstehend beschriebenen Verfahrensschritte umsetzen.

So zeigt die Figur 8 eine Vorrichtung 50, die Teil eines Systems 60 ist und die eine Speichereinheit 51 aufweist. Die Speichereinheit 51 ist dazu ausgebildet, eine Bauteilbeschreibung 52 zu speichern, die ein Werkstück beschreibt. Die Vorrichtung 50 weist ferner eine Abkühlbestimmungseinheit 53 auf, die dazu ausgebildet ist, unter Verwendung der Bauteilbeschreibung 52 ein Abkühlverhalten 54 zu bestimmen. Das bedeutet, dass die Abkühlbestimmungseinheit 53 für Volumenelemente der Bauteilbeschreibung 52 bestimmt, ob die Abkühlgeschwindigkeit an den Volumenelementen größer oder kleiner einer kritischen Abkühlgeschwindigkeit ist.

Das Abkühlverhalten 54 wird von einer Anpassungseinheit 55 eingelesen, die ebenfalls Teil der Vorrichtung 50 ist. Darüber hinaus liest die Anpassungseinheit 55 die Bauteilbeschreibung 52 aus der Speichereinheit 51 aus. Die Anpassungseinheit 55 ist dazu ausgebildet, unter Berücksichtigung der Bauteilbeschreibung 52 und des Abkühlverhaltens 54 zu bestimmen, wie die Bauteilbeschreibung 52 bzw. das durch die Bauteilbeschreibung beschriebene Werkstück, abgeändert werden muss, sodass die Abkühlgeschwindigkeit sämtlicher Volumenelemente der Bauteilbeschreibung 52 größer als die kritische Abkühlgeschwindigkeit ist.

Eine angepasste bzw. optimierte Bauteilbeschreibung 56 wird im Anschluss an eine Spritzgussmaschine 57 übergeben, die das Werkstück bzw. Bauteil gemäß der angepassten Bauteilbeschreibung 56 erstellt. Insbesondere kann die Bauteilbeschreibung 56 auch Informationen zum Betrieb der Spritzgussmaschine 57 angeben. Beispielsweise kann die Bauteilbeschreibung 56 eine Vortriebsgeschwindigkeit des Stempels 6 angeben. Es ist ferner denkbar, dass die angepasste Bauteilbeschreibung 56 angibt, über wie viele Einlassöffnungen 10 das flüssige Material in eine Form 2 eingeführt werden soll.

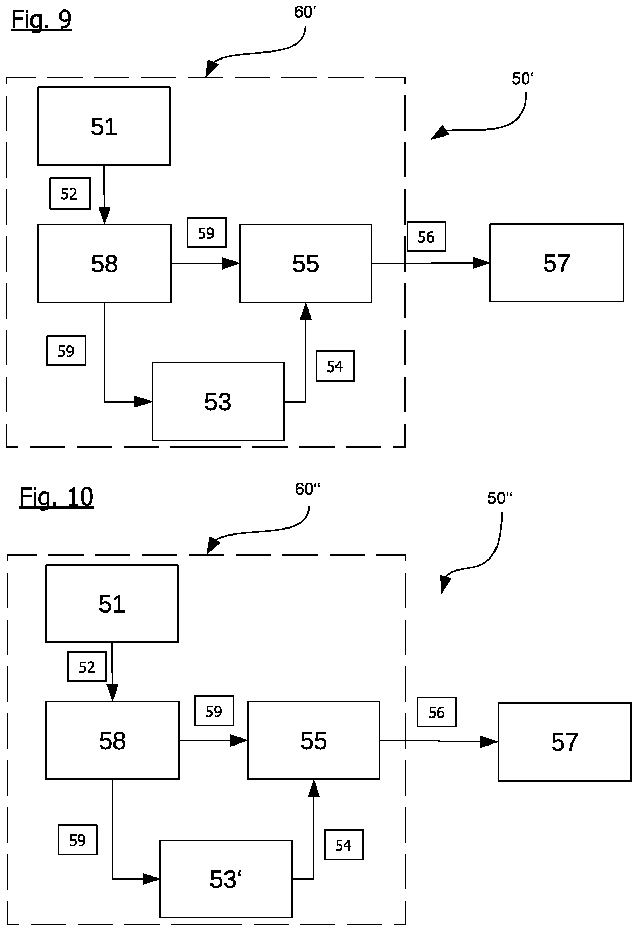

Das Ausführungsbeispiele Figur 9 entspricht im Wesentlichen dem Ausführungsbeispiel der Figur 8. Das Ausführungsbeispiel der Figur 9 zeigt ein System 60' mit einer Vorrichtung 50`, die ebenfalls über eine Speichereinrichtung 51, eine Abkühlbestimmungseinheit 53 und eine Anpassungseinheit 55 verfügt. Das System 60' weist ferner eine Spritzgussmaschine 57 auf. Zusätzlich ist bei der Vorrichtung 50' eine Optimierungseinheit 58 vorgesehen. Die Optimierungseinheit 58 ist dazu ausgebildet, mindestens eine Lokalgeometrie zu bestimmen, an der bei einem Werkstück Material eingespart werden kann. Ein solches Verfahren ist zum Beispiel im Zusammenhang mit der Figur 6 beschrieben.

Die Optimierungseinheit 58 ist dazu ausgebildet, eine optimierte Bauteilbeschreibung 59 an die Anpassungseinheit 55 und die Abkühlbestimmungseinheit 53 auszugeben.

Das Ausführungsbeispiel der Figur 10 entspricht im Wesentlichen den Ausführungsbeispielen der Figuren 8 und 9. Figur 10 zeigt ein System 60" mit einer Vorrichtung 50", die eine Speichereinheit 51, eine Optimierungseinheit 58 und eine Anpassungseinheit 55 aufweist. Das System 60" weist ferner eine Spritzgussmaschine 57 auf.

Bei dem Ausführungsbeispiel der Figur 10 ist vorgesehen, dass die von der Optimierungseinheit 58 erzeugte optimierte Bauteilbeschreibung 59 durch eine Simulationseinheit 53'eingelesen wird. Die Simulationseinheit 53'ist dazu ausgebildet, für jedes Volumenelement einer Bauteilbeschreibung 59 ein Abkühlverhalten bzw. eine Abkühlgeschwindigkeit zu simulieren. Das Ergebnis der Simulation wird als Abkühlverhalten 54 von der Anpassungseinheit 55 eingelesen, die dazu ausgebildet ist, unter Berücksichtigung des Abkühlverhaltens 54 und der optimierten Bauteilbeschreibung 59 eine angepasste Bauteilbeschreibung 56 zu erzeugen. Die angepasste Bauteilbeschreibung 46 wird von der Spritzgussmaschine 57 eingelesen und zur Fertigung eines Werkstücks bzw. Bauteils verwendet.

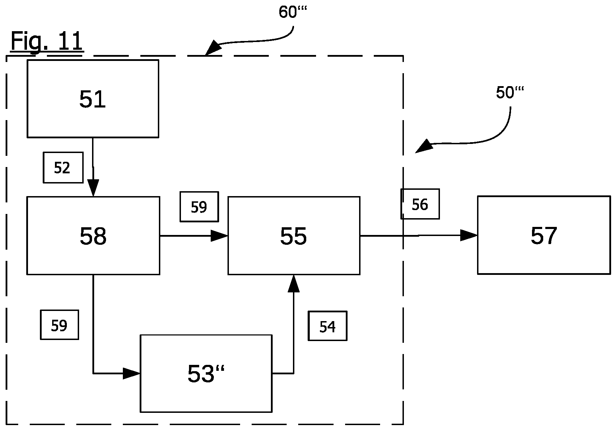

Die Figur 11 zeigt ein weiteres Ausführungsbeispiel, dass ein System 60‴ mit einer Vorrichtung 50‴ zeigt. Die Vorrichtung 50‴ weist eine Speichereinheit 51, ein Optimierungseinheit 58 und eine Anpassungseinheit 55 auf. Das System 60‴ weist ferner eine Spritzgussmaschine 57 auf. Darüber hinaus weist die Vorrichtung 50‴ ein Al-System 53" auf, welches dazu ausgebildet ist, einen Klassifikator und/oder einen Regressor zu implementieren, wie sie im Zusammenhang mit der Figur 7 beschrieben worden sind.

Das Al-System 53" erzeugt ein Abkühlverhalten 54, das von der Anpassungseinheit 55 zusammen mit der optimierten Bauteilbeschreibung 59 verwendet werden kann, um eine angepasste Bauteilbeschreibung 56 zu erzeugen, die von der Spritzgussmaschine 57 verwendet wird, um ein Werkstück bzw. Bauteil zu fertigen.

### Bezugszeichenliste:

- 1, 57: Spritzgussmaschine
- 2: Form
- 3: Schmelzzylinder
- 4, 4': Heizelement
- 5: Einfülltrichter
- 6: Schnecke
- 7: Stempel
- 8: flüssiges Ausgangsmaterial
- 9: Leitungssystem
- 10, 10', 10", 10‴: Einlassöffnung
- 11: Formkammer
- 20: Werkstück
- 21, 21': Kühlmittel/Kupferstab
- 22: Temperaturverlauf
- 30: Bauteilbeschreibung/CAD-Modell
- 30': optimierte Bauteilbeschreibung
- 31: erstes Volumenelement
- 32: zweites Volumenelement
- 33: erstes Temperaturdiagramm
- 34: zweites Temperaturdiagramm
- 35: Kraftangriffspunkt
- 36, 36': Leerraum
- 40: künstliches neuronales Netz
- 41: Eingangsdaten/Tensor
- 42: erste Faltung
- 43: Merkmalsdetektor
- 44: Subsampling
- 45: zweite Merkmalsdetektoren
- 46: zweite Faltung
- 47: dritte Merkmalsdetektoren
- 48: feedforward-Schicht
- 49: Ausgabeschicht
- 50, 50', 50", 50‴: System
- 51: Speichereinheit
- 52: Bauteilbeschreibung/CAD-Modell
- 53: Abkühlbestimmungseinheit
- 53': Simulationseinheit
- 53": AI-System
- 54: Abkühlverhalten
- 55: Anpassungseinheit
- 56: angepasste Bauteilbeschreibung
- 58: Optimierungseinheit
- 59: optimierte Bauteilbeschreibung
- 60, 60', 60", 60‴: Vorrichtung
- C1: Ausgangstemperatur
- C2: Zieltemperatur
- T1, T2: Zeitpunkt
- F: Kraft

## Patentansprüche

1. Computerimplementiertes Verfahren zum Anpassen einer Bauteilbeschreibung eines zu fertigenden metallischen Werkstücks mit amorphen Eigenschaften, welche für die Steuerung einer Spritzgussvorrichtung vorgesehen ist, umfassend:
- Bestimmen eines Abkühlverhaltens zumindest eines Teils eines zu fertigenden metallischen Werkstücks unter Berücksichtigung einer Bauteilbeschreibung des Werkstücks, wobei das Abkühlverhalten eine Abkühlgeschwindigkeit angibt, die Bauteilbeschreibung als ein CAD-Modell ausgebildet ist und die Bauteilbeschreibung die Geometrie des zu fertigenden Werkstücks angibt;
- Vergleichen der Abkühlgeschwindigkeit mit einer kritischen Abkühlgeschwindigkeit, wobei die kritische Abkühlgeschwindigkeit eine Abkühlgeschwindigkeit angibt, ab der eine Kristallisation einer Schmelze ausbleibt und die Schmelze im Glaszustand erstarrt;
- Anpassen der Geometrie des zu fertigenden Werkstücks, die durch zumindest einen Teil der Bauteilbeschreibung angeben wird, unter Berücksichtigung des bestimmten Abkühlverhaltens des Werkstücks, wobei das Anpassen auch ein Bestimmen eines zu verwendenden Materials umfasst derart, dass amorphe Eigenschaften im zu fertigenden Werkstück erreicht werden, wobei die kritische Abkühlgeschwindigkeit unter Berücksichtigung des zu verwendenden Materials bestimmt wird.

2. Verfahren nach Anspruch 1, **dadurch gekennzeichnet, dass**
das Anpassen ein Einfügen von mindestens einer Kühlmittelbeschreibung in die Bauteilbeschreibung umfasst, wobei die Kühlmittelbeschreibung ein Kühlmittel angibt, das zu einer erhöhten Energieabfuhr aus dem zu fertigenden Werkstück führt.

3. Verfahren nach einem der vorhergehenden Ansprüche,
**gekennzeichnet durch**
Optimieren der Bauteilbeschreibung, unter Verwendung einer Finiten-Elemente- und/oder Finite-Volumen-Simulation des Werkstücks.

4. Verfahren nach einem der vorhergehenden Ansprüche, insbesondere nach Anspruch 3,
**dadurch gekennzeichnet, dass**,
das Optimieren der Bauteilbeschreibung ein Identifizieren zumindest einer Lokalgeometrie des Werkstücks in der Bauteilbeschreibung umfasst, wobei die Lokalgeometrie einen Bereich des Werkstücks angibt, in dem Material eingespart werden kann.

5. Verfahren nach einem der vorhergehenden Ansprüche, insbesondere nach Anspruch 4 **dadurch gekennzeichnet, dass**
das Bestimmen des Abkühlverhaltens ein Simulieren eines Abkühlverhaltens für das Werkstück umfasst, wobei das Abkühlverhalten eine Abkühlgeschwindigkeit angibt.

6. Verfahren nach einem der vorhergehenden Ansprüche, insbesondere nach einem der Ansprüche 3 bis 5,
**dadurch gekennzeichnet, dass**
die Bauteilbeschreibung eine Vielzahl von Volumenelementen angibt, wobei das Abkühlverhalten eine Volumenabkühlgeschwindigkeit für mindestens ein Volumenelement angibt, insbesondere jeweils für die Vielzahl der Volumenelemente angibt.

7. Verfahren nach einem der vorhergehenden Ansprüche,
**dadurch gekennzeichnet, dass**
das Anpassen nur dann ausgeführt wird, wenn das Vergleichen ergibt, dass die Abkühlgeschwindigkeit für mindestens ein Volumenelement unterhalb der kritischen Abkühlgeschwindigkeit liegt.

8. Verfahren nach einem der vorhergehenden Ansprüche,
**gekennzeichnet durch**
Klassifizieren, insbesondere für mindestens ein, vorzugsweise jedes, Volumenelement einer/der Bauteilbeschreibung, ob für zumindest einen Teil des Werkstücks die Abkühlgeschwindigkeit unterhalb der kritischen Abkühlgeschwindigkeit liegt.

9. Steuerverfahren, umfassend
- Bereitstellen einer Bauteilbeschreibung, die ein zu fertigendes Werkstück angibt;
- Anpassen der Bauteilbeschreibung nach einem Verfahren nach einem der vorhergehenden Ansprüche;
- Steuern einer Spritzgussvorrichtung unter Verwendung der angepassten Bauteilbeschreibung zur Fertigung eines Werkstücks.

10. Computerlesbares-Speichermedium, welches Instruktionen enthält, die mindestens einen Prozessor dazu veranlassen, ein Verfahren nach einem der vorhergehenden Ansprüche zu implementieren, wenn das Verfahren von dem mindestens einen Prozessor ausgeführt wird.

11. Vorrichtung zum Anpassen einer Bauteilbeschreibung eines zu fertigenden metallischen Werkstücks mit amorphen Eigenschaften, Folgendes aufweisend:
- mindestens eine Speichereinheit zur Speicherung mindestens einer Bauteilbeschreibung, wobei die Bauteilbeschreibung als ein CAD-Modell ausgebildet ist und wobei die Bauteilbeschreibung die Geometrie des zu fertigenden Werkstücks angibt;
- mindestens eine Abkühlbestimmungseinheit, die dazu ausgebildet ist, unter Berücksichtigung der mindestens einen Bauteilbeschreibung ein Abkühlverhalten zumindest eines Teils eines zu fertigenden metallischen Werkstücks zu bestimmen, wobei das Abkühlverhalten eine Abkühlgeschwindigkeit angibt;
- eine Vergleichseinheit, die dazu ausgebildet ist, die Abkühlgeschwindigkeit mit einer kritischen Abkühlgeschwindigkeit zu vergleichen;
- eine Anpassungseinheit, die dazu ausgebildet ist, die Geometrie des zu fertigenden Werkstücks anzupassen, die durch zumindest einen Teil der Bauteilbeschreibung angegeben wird, unter Berücksichtigung des bestimmten Abkühlverhaltens und unter Berücksichtigung des Vergleichs, und wobei die Anpassungseinheit ferner dazu ausgebildet ist, auch ein zu verwendendes Material zu bestimmen derart, dass amorphe Eigenschaften im zu fertigenden Werkstück erreicht werden, wobei die kritische Abkühlgeschwindigkeit unter Berücksichtigung des zu verwendenden Materials bestimmt ist.

12. Vorrichtung Anspruch 11,
**dadurch gekennzeichnet, dass**
eine Optimierungseinheit ferner dazu ausgebildet ist, zumindest eine Lokalgeometrie des Werkstücks in der Bauteilbeschreibung zu identifizieren, wobei die Lokalgeometrie einen Bereich des Werkstücks angibt, in dem Material eingespart werden kann.

13. System zur Herstellung eines Werkstücks, Folgendes aufweisend:
- Eine Vorrichtung zum Anpassen einer Bauteilbeschreibung nach einem der Ansprüche 11 bis 12;
- Eine Spritzgussvorrichtung, die dazu ausgebildet ist, ein Werkstück unter Verwendung einer Bauteilbeschreibung, insbesondere unter Verwendung einer angepassten Bauteilbeschreibung, herzustellen.

14. System nach Anspruch 13,
**gekennzeichnet durch**
- eine Kammer der Spritzgussvorrichtung zur Aufnahme von flüssigem Material
- einen Stempel, der dazu ausgebildet ist, flüssiges Material in die Kammer mit einer Stempelgeschwindigkeit einzubringen, wobei die Stempelgeschwindigkeit unter Berücksichtigung der Bauteilbeschreibung ausgewählt ist.

## Claims

1. A computer-implemented method for adapting a component description of a metal workpiece to be produced with amorphous properties, which description is intended for controlling an injection molding device, the method comprising:
- determining a cooling behavior of at least part of a metal workpiece to be produced by taking into account a component description of the workpiece, wherein the cooling behavior indicates a cooling rate, the component description is in the form of a CAD model and the component description indicates the geometry of the workpiece to be produced;
- comparing the cooling rate with a critical cooling rate, wherein the critical cooling rate indicates a cooling rate from which crystallization of a melt ceases and the melt solidifies in the glassy state;
- adapting the geometry of the workpiece to be produced, which geometry is indicated by at least part of the component description, by taking into account the determined cooling behavior of the workpiece, wherein adapting also comprises determining a material to be used so that amorphous properties are achieved in the workpiece to be produced, wherein the critical cooling rate is determined by taking into account the material to be used.

2. The method according to claim 1, **characterized in that**
adapting comprises adding at least one coolant description into the component description, the coolant description indicating a coolant which leads to increased energy dissipation from the workpiece to be produced.

3. The method according to any of the preceding claims,
**characterized by**
optimizing the component description using a finite element and/or finite volume simulation of the workpiece.

4. The method according to any of the preceding claims, in particular according to claim 3, **characterized in that**
optimizing the component description comprises identifying at least a local geometry of the workpiece in the component description, the local geometry indicating a region of the workpiece in which material can be economized.

5. The method according to any of the preceding claims, in particular according to claim 4, **characterized in that**
determining the cooling behavior comprises simulating a cooling behavior for the workpiece, the cooling behavior indicating a cooling rate.

6. The method according to any of the preceding claims, in particular according to any of claims 3 to 5,
**characterized in that**
the component description indicates a plurality of volume elements, the cooling behavior indicating a volume cooling rate for at least one volume element, in particular for each of the plurality of volume elements.

7. The method according to any of the preceding claims,
**characterized in that**
the adaptation is only carried out if the comparison shows that the cooling rate for at least one volume element is below the critical cooling rate.

8. The method according to any of the preceding claims,
**characterized by**
classifying, in particular for at least one, preferably each, volume element of a/the component description, whether the cooling rate for at least part of the workpiece is below the critical cooling rate.

9. A control method, comprising
- providing a component description which indicates a workpiece to be produced;
- adapting the component description using a method according to any of the preceding claims;
- controlling an injection molding device using the adapted component description in order to produce a workpiece.

10. A computer-readable storage medium containing instructions which cause at least one processor to implement a method according to any of the preceding claims when the method is carried out by the at least one processor.

11. A device for adapting a component description of a metal workpiece to be produced with amorphous properties, comprising the following:
- at least one storage unit for storing at least one component description, wherein the component description is in the form of a CAD model, and wherein the component description indicates the geometry of the workpiece to be produced;
- at least one cooling determination unit which is designed to determine a cooling behavior of at least part of a metal workpiece to be produced by taking into account the at least one component description, wherein the cooling behavior indicates a cooling rate;
- a comparison unit which is designed to compare the cooling rate with a critical cooling rate;
- an adaptation unit which is designed to adapt the geometry of the workpiece to be produced, which geometry is indicated by at least part of the component description, by taking into account the determined cooling behavior and by taking into account the comparison, and wherein the adaptation unit is further designed to also determine a material to be used so that amorphous properties are achieved in the workpiece to be produced, wherein the critical cooling rate is determined by taking into account the material to be used.

12. The device according to claim 11,
**characterized in that**
an optimization unit is further designed to identify at least a local geometry of the workpiece in the component description, the local geometry indicating a region of the workpiece in which material can be economized.

13. A system for producing a workpiece, comprising the following:
- a device for adapting a component description according to any of claims 11 to 12;
- an injection molding device which is designed to produce a workpiece by using a component description, in particular by using an adapted component description.

14. The system according to claim 13,
**characterized by**
- a chamber of the injection molding device for receiving liquid material
- a stamp which is designed to introduce liquid material into the chamber at a stamping rate, the stamping rate being selected by taking into account the component description.

## Revendications

1. Procédé mis en oeuvre par ordinateur, permettant l'ajustement d'une description de composant d'une pièce métallique à fabriquer comportant des propriétés amorphes, laquelle description de composant est prévue pour la commande d'un dispositif de moulage par injection, comprenant :
- la détermination d'un comportement de refroidissement d'au moins une partie d'une pièce métallique à fabriquer en tenant compte d'une description de composant de la pièce, dans lequel le comportement de refroidissement indique une vitesse de refroidissement, la description de composant est configurée comme un modèle CAO et la description de composant indique la géométrie de la pièce à fabriquer ;
- la comparaison de la vitesse de refroidissement avec une vitesse de refroidissement critique, dans lequel la vitesse de refroidissement critique indique une vitesse de refroidissement à partir de laquelle aucune cristallisation d'une masse fondue ne se produit et la masse fondue se solidifie à l'état vitreux ;
- l'ajustement de la géométrie de la pièce à fabriquer, laquelle géométrie est indiquée par au moins une partie de la description de composant, en tenant compte du comportement de refroidissement déterminé de la pièce, dans lequel l'ajustement comprend également une détermination d'un matériau à utiliser, de telle sorte que des propriétés amorphes dans la pièce à fabriquer sont obtenues, dans lequel la vitesse de refroidissement critique est déterminée en tenant compte du matériau à utiliser.

2. Procédé selon la revendication 1, **caractérisé en ce que**
l'ajustement comprend une intégration d'au moins une description d'agent de refroidissement dans la description de composant, dans lequel la description d'agent de refroidissement indique un agent de refroidissement qui entraîne une dissipation d'énergie accrue de la pièce à fabriquer.

3. Procédé selon l'une des revendications précédentes,
**caractérisé par**
une optimisation de la description de composant à l'aide d'une simulation par éléments finis et/ou par volumes finis de la pièce.

4. Procédé selon l'une des revendications précédentes, en particulier selon la revendication 3,
**caractérisé en ce que**
l'optimisation de la description de composant comprend une identification d'au moins une géométrie locale de la pièce dans la description de composant, dans lequel la géométrie locale indique une zone de la pièce, zone dans laquelle du matériau peut être économisé.

5. Procédé selon l'une des revendications précédentes, en particulier selon la revendication 4,
**caractérisé en ce que**
la détermination du comportement de refroidissement comprend une simulation d'un comportement de refroidissement pour la pièce, dans lequel le comportement de refroidissement indique une vitesse de refroidissement.

6. Procédé selon l'une des revendications précédentes, en particulier selon l'une des revendications 3 à 5,
**caractérisé en ce que**
la description de composant indique une pluralité d'éléments de volume, dans lequel le comportement de refroidissement indique une vitesse de refroidissement de volume pour au moins un élément de volume, en particulier respectivement pour la pluralité d'éléments de volume.

7. Procédé selon l'une des revendications précédentes,
**caractérisé en ce que**
l'ajustement n'est effectué que si la comparaison révèle que la vitesse de refroidissement pour au moins un élément de volume est inférieure à la vitesse de refroidissement critique.

8. Procédé selon l'une des revendications précédentes,
**caractérisé par**
une classification, en particulier pour au moins un élément de volume, de préférence pour chaque élément de volume, d'une/de la description de composant si, pour au moins une partie de la pièce, la vitesse de refroidissement est inférieure à la vitesse de refroidissement critique.

9. Procédé de commande, comprenant
- la fourniture d'une description de composant qui indique une pièce à fabriquer ;
- l'ajustement de la description de composant selon un procédé selon l'une des revendications précédentes ;
- la commande d'un dispositif de moulage par injection à l'aide de la description de composant ajustée pour la fabrication d'une pièce.

10. Support de stockage lisible par ordinateur, lequel contient des instructions qui amènent au moins un processeur à mettre en oeuvre un procédé selon l'une des revendications précédentes lorsque le procédé est exécuté par l'au moins un processeur.

11. Dispositif permettant l'ajustement d'une description de composant d'une pièce métallique à fabriquer comportant des propriétés amorphes, présentant les éléments suivants :
- au moins une unité de stockage destinée à stocker au moins une description de composant, dans lequel la description de composant est configurée comme un modèle CAO et dans lequel la description de composant indique la géométrie de la pièce à fabriquer ;
- au moins une unité de détermination de refroidissement qui est configurée pour déterminer, en tenant compte de l'au moins une description de composant, un comportement de refroidissement d'au moins une partie d'une pièce métallique à fabriquer, dans lequel le comportement de refroidissement indique une vitesse de refroidissement ;
- une unité de comparaison qui est configurée pour comparer la vitesse de refroidissement avec une vitesse de refroidissement critique ;
- une unité d'ajustement qui est configurée pour ajuster la géométrie de la pièce à fabriquer, laquelle géométrie est indiquée par au moins une partie de la description de composant, en tenant compte du comportement de refroidissement déterminé et en tenant compte de la comparaison, et dans lequel l'unité d'ajustement est en outre configurée pour déterminer également un matériau à utiliser, de telle sorte que des propriétés amorphes dans la pièce à fabriquer sont obtenues, dans lequel la vitesse de refroidissement critique est déterminée en tenant compte du matériau à utiliser.

12. Dispositif selon la revendication 11,
**caractérisé en ce que**
une unité d'optimisation est en outre configurée pour identifier au moins une géométrie locale de la pièce dans la description de composant, dans lequel la géométrie locale indique une zone de la pièce, zone dans laquelle du matériau peut être économisé.

13. Système permettant la fabrication d'une pièce, présentant les éléments suivants :
- un dispositif permettant d'ajuster une description de composant selon l'une des revendications 11 à 12 ;
- un dispositif de moulage par injection qui est conçu pour fabriquer une pièce à l'aide d'une description de composant, en particulier à l'aide d'une description de composant ajustée.

14. Système selon la revendication 13,
**caractérisé par**
- une chambre du dispositif de moulage par injection destinée à recevoir du matériau liquide
- un poinçon qui est conçu pour introduire du matériau liquide dans la chambre à une vitesse de poinçon, dans lequel la vitesse de poinçon est choisie en tenant compte de la description de composant.
